(19) Europäisches Patentamt
European Patent Office
Office européen des brevets

(11) Veröffentlichungsnummer: **0 100 966 A1**

(12) # EUROPÄISCHE PATENTANMELDUNG

(21) Anmeldenummer: 83107422.4

(22) Anmeldetag: 28.07.83

(51) Int. Cl.³: C 07 C 125/06
C 07 F 9/09, A 01 N 47/10
A 01 N 57/20

(30) Priorität: 14.08.82 DE 3230294

(43) Veröffentlichungstag der Anmeldung:
22.02.84 Patentblatt 84/8

(84) Benannte Vertragsstaaten:
BE CH DE FR GB IT LI

(71) Anmelder: BAYER AG
Zentralbereich Patente, Marken und Lizenzen
D-5090 Leverkusen 1, Bayerwerk(DE)

(72) Erfinder: Heywang, Gerhard, Dr.
Nittumer Weg 4
D-5060 Berg.-Gladbach 2(DE)

(72) Erfinder: Kühle, Engelbert, Dr.
von-Bodelschwingh-Strasse 42
D-5060 Berg.-Gladbach 2(DE)

(72) Erfinder: Behrenz, Wolfgang, Dr.
Untergründemich 14
D-5063 Overath(DE)

(54) **Neue Carbamidsäureester Verfahren zu ihrer Herstellung und ihre Verwendung als Schädlingsbekämpfungsmittel.**

(57) Die vorliegende Erfindung betrifft neue Carbamidsäureester der allgemeinen Formel (I)

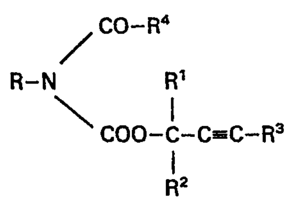

(I)

in welcher R, $R^1$ bis $R^4$ die in der Beschreibung angegebene Bedeutung besitzen.

Sie können als Synergisten in Schädlingsbekämpfungsmitteln verwendet werden. Sie werden nach den in der Beschreibung beschriebenen Verfahren hergestellt.

EP 0 100 966 A1

BAYER AKTIENGESELLSCHAFT 5090 Leverkusen, Bayerwerk

Zentralbereich
Patente, Marken und Lizenzen S/ABc
I/III

# Neue Carbamidsäureester
# Verfahren zu ihrer Herstellung und ihre Verwendung als Schädlingsbekämpfungsmittel

Die vorliegende Erfindung betrifft neue Carbamidsäureester. Verfahren zur ihrer Herstellung sowie ihre Verwendung als Schädlingsbekämpfungsmittel, vorzugsweise zur Bekämpfung von Arthropoden, insbesondere von Insekten, Milben und Spinnentieren.

Synergistische Mischungen von insektiziden Wirkstoffen, z.B. von Pyrethroiden mit bestimmten Methylendioxyphenyl-Derivaten, z.B. Piperonylbutoxid als Synergisten sind bereits bekannt geworden (vgl. z.B. K. Naumann, Chemie der Pflanzenschutz- und Schädlingsbekämpfungsmittel, Springer-Verlag Berlin, Band 7 (1981), Seiten 3-6). Ferner sind bestimmte N-Arylcarbamidsäurealkinylester (vgl. DE-A-20 41 986) und spezielle N-Alkyl-carbamidsäure-alkinylester (vgl. BE-A-633 594) als Synergisten beschrieben worden. Unter den Bedingungen der praktischen Anwendung ist die Wirksamkeit solcher Präparate jedoch nicht immer voll befriedigend.

Es wurde gefunden, daß die neuen Carbamidsäureester der allgemeinen Formel (I)

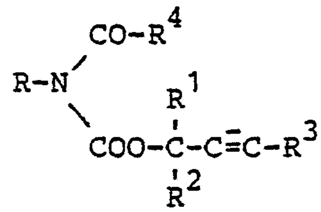

(I)

in welcher

R für Wasserstoff, für gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen und

$R^4$ für einen gegebenenfalls substituierten Rest aus der Reihe Alkoxy, Alkenyloxy, Alkinyloxy, Aryloxy, Arylalkyloxy oder für einen Rest der Formel

$$-\overset{O}{\overset{\|}{P}}(OR^5)_2,$$

in welcher

$R^5$ gegebenenfalls substituiertes Alkyl oder gegebenenfalls substituiertes Alkenyl bedeutet, steht,

als Synergisten in Schädlingsbekämpfungsmitteln verwendet werden können, welche zusätzlich Arthropodizide, welche vorzugsweise gegen Insekten und Spinnentiere, insbesondere gegen Insekten wirksame Stoffe enthalten.

Als Arthropodizide (gegen Arthropoden wirksame Stoffe) kommen praktisch alle üblichen Wirkstoffe in Frage (vgl. z.B. K.H.Büchel, Pflanzenschutz und Schädlingsbekämpfungsmittel, Thieme Verlag Stuttgart, 1977 und Farm Chemicals Handbook, 1979, Meister Publishing Co, Willougbuy, 1979).

Weiterhin wurde gefunden, daß man die Carbamidsäureester der allgemeinen Formel I erhält, wenn man

(1) zur Herstellung der Verbindungen der allgemeinen Formel I, in welcher

R für gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen, und

$R^4$ für den Alkinoxyrest

$$-O-\underset{R^2}{\overset{R^1}{C}}-C\equiv C-R^3 \quad ,$$

in welchem $R^1$, $R^2$ und $R^3$ die oben angegebene Bedeutung haben, steht,

a) Bischlorcarbonylamine der allgemeinen Formel (II)

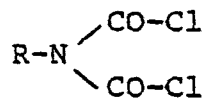
(II)

in welcher R die oben angegebene Bedeutung hat, mit Alkinolen der allgemeinen Formel (III)

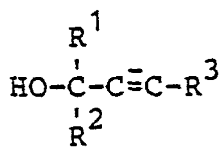
(III)

in welcher $R^1$, $R^2$ und $R^3$ die oben angebebene Bedeutung haben, in einem molaren Verhältnis von 1:2 (II:III) oder unter einem Überschuß der Alkinole der allgemeinen Formel III in Gegenwart eines (gegebenenfalls im Überschuß eingesetzten) Säurebindemittels und gegebenenfalls in Gegenwart eines inerten Verdünnungsmittels bei Temperaturen zwischen etwa -30 und 120°C umsetzt, oder

2) zur Herstellung von Verbindungen der Formel I, in welcher

R für gegebenenfalls substituiertes Alkyl oder für gegebenenfalls substituiertes Cycloalkyl steht,

$R^1$, $R^2$ und $R^3$ gleich oder verschieden sind und einzeln für Wasserstoff oder gegebenenfalls substituiertes Alkyl stehen und

$R^4$ für einen gegebenenfalls substituierten Rest

aus der Reihe Alkoxy, Alkenyloxy, Alkinyloxy, Aryloxy oder Aralkyloxy steht,

b) Bischlorcarbonyl-alkylamine der allgemeinen Formel (II)

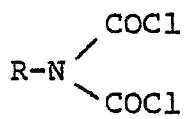 (II)

in welcher R die oben angegebene Bedeutung hat, zunächst mit einem Moläquivalent eines Alkinols der allgemeinen Formel (III)

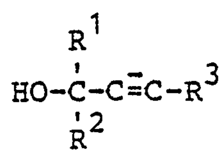 (III)

in welcher $R^1$, $R^2$ und $R^3$ die oben angegebene Bedeutung haben, in Gegenwart eines (gegebenenfalls im Überschuß eingesetzten) Säurebindemittels und gegebenenfalls in Gegenwart eines inerten Verdünnungsmittels bei Temperaturen zwischen etwa -30 und 120°C umsetzt und die erhaltenen Verbindungen der allgemeinen Formel (IV)

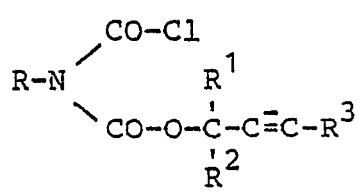 (IV)

in welcher R, $R^1$, $R^2$ und $R^3$ die oben angegebene Bedeutung haben, gegebenenfalls nach ihrer Isolierung mit einer Verbindung der allgemeinen Formel (V)

$$H-R^4 \qquad (V)$$

in welcher $R^4$ die oben angegebene Bedeutung hat, in Gegenwart eines (gegebenenfalls im Überschuß eingesetzten) Säurebindemittels und gegebenenfalls in Gegenwart eines Verdünnungsmittels bei Temperaturen zwischen etwa -30 und 120°C umsetzt, oder

3) zur Herstellung der Verbindungen der allgemeinen Formel I, in welcher

R für gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen, und

$R^4$ für $-\overset{O}{\overset{\|}{P}}(OR^5)_2$, in welcher $R^5$ gegebenenfalls substituiertes Alkyl oder gegebenenfalls substituiertes Alkenyl bedeutet, steht,

c) Verbindungen der allgemeinen Formel (IV)

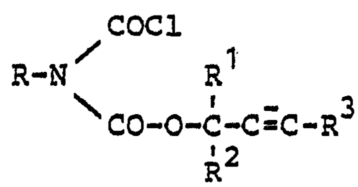

(IV)

in welcher R, $R^1$, $R^2$ und $R^3$ die oben angegebene Bedeutung haben mit Phosphiten der allgemeinen Formel (VI)

$$P(OR^5)_3 \qquad (VI)$$

in welcher $R^5$ die oben angegebene Bedeutung hat, gegebenenfalls in Gegenwart eines Verdünnungsmittels bei Temperaturen zwischen etwa -30 und 120°C, oder

4) zur Herstellung der Verbindungen der allgemeinen Formel I, in welcher

R für Wasserstoff, gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen, und

$R^4$ für einen gegebenenfalls substituierten Rest aus der Reihe Alkoxy, Alkenyloxy, Alkinyloxy, Aryloxy oder Arylalkyloxy steht,

d) Bischlorcarbonylamine der allgemeinen Formel (II)

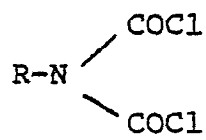

(II)

in welcher

R die oben angegebene Bedeutung hat, mit einem Moläquivalent der Verbindung der allgemeinen Formel (V)

$$H-R^4 \qquad (V)$$

in welcher $R^4$ die oben angegebene Bedeutung hat, in Gegenwart eines (gegebenenfalls im Überschuß eingesetzten) Säurebindemittels und gegebenenfalls in Gegenwart eines inerten Verdünnungsmittels bei Temperaturen zwischen etwa -30 und 120°C umsetzt und anschließend die erhaltene Verbindung der allgemeinen Formel (VII)

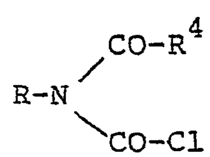

(VII)

in welcher R und $R^4$ die oben angegebene Bedeutung haben,

gegebenenfalls nach ihrer Isolierung, mit einem Moläquivalent oder einem Überschuß eines Alkinols der allgemeinen Formel (III)

$$HO-\overset{R^1}{\underset{R^2}{C}}-C\equiv C-R^3 \qquad (III)$$

in welcher $R^1$, $R^2$ und $R^3$ die oben angegebene Bedeutung haben, in Gegenwart eines (gegebenenfalls im Überschuß eingesetzten) Säurebindemittels und gegebenenfalls in Gegenwart eines inerten Verdünnungsmittels bei Temperaturen zwischen -30 und 120°C umsetzt, oder

5) zur Herstellung der Verbindungen der allgemeinen Formel I, in welcher

R für Wasserstoff steht,

$R^1$, $R^2$ und $R^3$ gleich oder verschieden sind und einzeln für Wasserstoff oder für gegebenenfalls substituiertes Alkyl stehen und $R^4$ für einen gegebenenfalls substituierten Rest aus der Reihe Alkoxy, Alkenyloxy, Alkinyloxy, Aryloxy oder Arylalkyloxy steht,

e) das Chlorcarbonylisocyanat der Formel (VIII)

$$OCN-CO-Cl \qquad (VIII)$$

mit einem Moläquivalent eines Alkinols der allgemeinen Formel (III)

$$HO-\overset{R^1}{\underset{R^2}{C}}-C\equiv C-R^3 \qquad (III)$$

in welcher $R^1$, $R^2$ und $R^3$ die oben angegebene Bedeutung haben, gegebenenfalls in Gegenwart eines Säurebindemittels und gegebenenfalls in Gegenwart eines inerten Verdünnungsmittels bei Temperaturen zwischen etwa -30 und 120°C umsetzt, und die erhaltene Verbindung der Formel (IX)

$$OCN-CO-O-\overset{R^1}{\underset{R^2}{C}}-C\equiv C-R^3 \qquad (IX)$$

in welcher $R^1$, $R^2$ und $R^3$ die oben angegebene Bedeutung haben, gegebenenfalls nach ihrer Isolierung, mit einer Verbindung der allgemeinen Formel (V)

$$H-R^4 \qquad (V)$$

in welcher $R^4$ die oben angegebene Bedeutung hat, gegebenenfalls in Gegenwart eines inerten Verdünnungsmittels und gegebenenfalls in Gegenwart eines Katalysators bei Temperaturen zwischen etwa -30 und 120°C umsetzt, oder

f) Chlorcarbonylisocyanat der Formel (VIII)

OCN-CO-Cl (VIII)

mit einem Moläquivalent einer Verbindung der allgemeinen Formel (V)

$H-R^4$ (V)

in welcher $R^4$ die oben angegebene Bedeutung hat,

gegebenenfalls in Gegenwart eines Säurebindemittels und gegebenenfalls in Gegenwart eines inerten Verdünnungsmittels bei Temperaturen zwischen etwa -30 und 120°C umsetzt, und die erhaltene Verbindung der allgemeinen Formel (X)

$OCN-CO-R^4$ (X)

in welcher $R^4$ die oben angegebene Bedeutung hat,

gegebenenfalls nach ihrer Isolierung mit einem Alkinol der allgemeinen Formel (III)

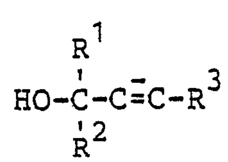

(III)

in welcher $R^1$, $R^2$ und $R^3$ die oben angegebene Bedeutung haben,

gegebenenfalls in Gegenwart eines inerten Verdünnungsmittels und gegebenenfalls in Gegenwart eines Katalysators bei Temperaturen zwischen etwa -30 und 120°C umsetzt.

Als gegebenenfalls substituiertes Alkyl R steht gegebenenfalls substituiertes geradkettiges oder verzweigtes Alkyl mit vorzugsweise 1-20, insbesondere 1-12, und besonders bevorzugt 1-8 Kohlenstoffatomen.

Beispielhaft seien gegebenenfalls substituierte Alkylreste der Reihe Methyl, Ethyl, n- und iso-Propyl, n-, iso- und tert.-Butyl, Neopentyl, Hexyl, Dodecyl genannt. Bevorzugt sind die Alkylreste R unsubstituiert. Besonders bevorzugt sind Methyl und Neopentyl.

Als gegebenenfalls substituiertes Cycloalkyl R steht gegebenenfalls substituiertes mono-, bi- und tricyclisches Cycloalkyl mit vorzugsweise 3 bis 10, insbesondere 3 bis 8 und besonders bevorzugt 3, 5 oder 6 Kohlenstoffatomen. Beispielhaft seien gegebenenfalls substituiertes Cyclopropyl, Cyclobutyl, Cyclopentyl, Cyclohexyl, Cycloheptyl, Bicyclo[2,2,1]-heptyl, Bicyclo[2,2,2]octyl und Adamantyl genannt. Bevorzugt sind die Cycloalkylreste R unsubstituiert. Besonders bevorzugt sind Cyclopentyl und Cyclohexyl.

Als gegebenenfalls substituiertes Alkyl $R^1$, $R^2$ und $R^3$, die gleich oder verschieden sein können, steht gegebenenfalls substituiertes geradkettiges oder verzweigtes Alkyl mit vorzugsweise 1-8, insbesondere 1-5, und besonders bevorzugt 1-3 Kohlenstoffatomen. Beispielhaft seien gegebenenfalls substituiertes Methyl, Ethyl, n- und iso-Propyl und Butyl genannt.

Als gegebenenfalls substituiertes Alkoxy $R^4$ steht gegebenenfalls substituiertes geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n- und iso-Propoxy und n-, iso- und tert.-Butoxy genannt. Bevorzugt sind die Alkoxyreste $R^4$ unsubstituiert.

Als gegebenenfalls substituiertes Alkenyloxy $R^4$ steht gegebenenfalls substituiertes geradkettiges oder verzweigtes Alkenyloxy mit vorzugsweise 3-12, insbesondere 3-8, und besonders bevorzugt 3-5 Kohlenstoffatomen. Beispielhaft seien gegebenenfalls substituiertes 2-Propenyloxy, i-Butenyloxy und 3-Pentenyloxy, genannt. Bevorzugt sind die Alkenyloxyreste R unsubstiutiert.

Als gegebenenfalls substituiertes Alkinyloxy $R^4$ steht gegebenenfalls substituiertes geradkettiges oder verzweigtes Alkinyloxy mit vorzugsweise 3-12, insbesondere 3-8 und besonders bevorzugt 3-5 Kohlenstoffatomen. Beispielhaft seien gegebenenfalls substituiertes Propargyloxy, 2-Butinyloxy, 1,1-Dimethyl-propargyloxy, 1-iso-Propylpropargyloxy, 5-Hexinyloxy genannt. Bevorzugt sind die Alkinyloxyreste $R^4$ unsubstituiert. Besonders bevorzugt ist der Propargyloxyrest.

Als gegebenenfalls substituiertes Aryloxy $R^4$ stehen vor-

zugsweise gegebenenfalls substituiertes Phenyloxy und Naphthyloxy. Vorzugsweise sind die Aryloxyreste $R^4$ unsubstituiert. Besonders bevorzugt ist Phenyloxy.

Als gegebenenfalls substituiertes (im Arylteil und/oder Alkylteil) Arylalkyloxy $R^4$ steht gegebenenfalls substituiertes geradkettiges oder verzweigtes Arylalkyloxy mit vorzugsweise insgesamt 7 - 20, insbesondere 7 - 15 und besonders bevorzugt 7 - 10 Kohlenstoffatomen. Beispielhaft seien gegebenenfalls substituiertes Benzyloxy, Phenylethyloxy, 2-Phenyl-2-methyl-ethoxy, Phenylpropoxy, genannt. Vorzugsweise sind die Arylalkyloxyreste $R^4$ unsubstituiert. Besonders bevorzugt ist der Benzyloxyrest.

Als gegebenenfalls substituiertes Alkyl $R^5$ steht gegebenenfalls substituiertes geradkettiges oder verzweigtes Alkyl mit vorzugsweise 1-12, insbesondere 1-8 und besonders bevorzugt 1-4 Kohlenstoffatomen. Beispielhaft seien gegebenenfalls substituiertes Methyl, Ethyl, n- und iso-Propyl, genannt. Besonders bevorzugt sind die Reste Methyl, Ethyl und 2-Chlorethyl.

Als gegebenenfalls substutiertes Alkenyl $R^5$ steht gegebenenfalls substituiertes, geradkettiges oder verzweigtes Alkenyloxy mit vorzugsweise 3-12, insbesondere 3-8 und besonders bevorzugt 3-5 Kohlenstoffatomen. Beispielhaft seien gegebenenfalls substituiertes 2-Propenyl, 2-i-Butenyl und 3-Pentenyl genannt.

Die in der Definition R, $R^1$, $R^2$, $R^3$, $R^4$ und $R^5$ genannten

substituierten Reste können einen oder mehrere, vorzugsweise 1 bis 3, insbesondere 1 oder 2 gleiche oder verschiedene Substituenten tragen. Als Substituenten seien beispielhaft aufgeführt:

Alkyl mit vorzugsweise 1-4, insbesondere 1-2 Kohlenstoffatomen, wie Methyl, Ethyl-, n-Propyl, iso-Propyl, tert.-Butyl, Alkoxy mit vorzugsweise 1 bis 4, insbesondere 1 oder 2 Kohlenstoffatomen, wie Methoxy, Ethoxy, n- und iso-Propyloxy und n-, iso- und tert-Butyloxy; Alkylthio mit vorzugsweise 1 bis 4, insbesondere 1 oder 2 Kohlenstoffatomen, wie Methylthio, Ethylthio, n- und iso-Propylthio und n-, iso- und tert-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Halogen, vorzugsweise Fluor, Chlor, Brom und Jod, insbesondere Chlor und Brom; Cyano; Nitro; Alkoxycarbonyl mit vorzugsweise 2 bis 4, insbesondere 2 oder 3 Kohlenstoffatomen, wie Methoxycarbonyl und Ethoxycarbonyl und Phenoxybenzyloxycarbonyl. Im Falle von Arylteilen enthaltenden Resten können die Arylteile, z.B. die Phenylringe auch durch Alkylendioxygruppen substituiert sein, welche vorzugsweise 1 bis 3, insbesondere 1 oder 2 Kohlenstoffatome enthalten und durch 1 bis 4 gleiche oder verschiedene Halogenatome (Fluor, Chlor, Brom und Jod) substituiert sein können.

Bevorzugt sind Verbindungen der allgemeinen Formel (I), in welcher

R für Wasserstoff oder für einen gegebenenfalls durch $C_1$-$C_4$-Alkoxy, Halogen, Cyan, Nitro und/oder Trifluormethyl substituierten Alkylrest mit 1-12 Kohlenstoffatomen oder für einen gegebenenfalls durch $C_1$-$C_4$-Alkoxy, Halogen, Cyano, Nitro und/oder Trifluormethyl substituierten Cycloalkylrest mit 3 bis 10 Kohlenstoffatomen steht und

$R^1$,$R^2$,$R^3$ gleich oder verschieden sind und einzeln für Wasserstoff oder für einen gegebenenfalls durch Halogen, Cyano, $C_1$-$C_4$-Alkoxy und/oder Trifluormethyl substituierten Alkylrest mit 1 bis 3 Kohlenstoffatomen steht und

$R^4$ für einen gegebenenfalls durch $C_1$-$C_4$-Alkoxy, Halogen, Cyan, Nitro und/oder Trifluormethyl substituierten Alkoxyrest mit 1 bis 6 Kohlenstoffatomen, oder für einen gegebenenfalls durch $C_1$-$C_4$-Alkoxy, Halogen, Cyan, Nitro und/oder Trifluormethyl substituierten Alkenyloxyrest mit 3 bis 8 Kohlenstoffatomen oder für einen gegebenenfalls durch $C_1$-$C_4$-Alkoxy, Halogen, Cyan oder Trifluormethyl substituierten Alkinyloxyrest mit 3 bis 8 Kohlenstoffatomen oder für einen gegebenenfalls durch $C_1$-$C_4$-Alkyl, $C_1$-$C_4$-Alkoxy, Dioxomethylen, Halogen, Cyan, Nitro und/oder Trifluormethyl substituierten Phenoxy- oder Naphthyloxyrest oder für einen gegebenenfalls durch $C_1$-$C_4$-Alkyl, $C_1$-$C_4$-Alkoxy, Dioxomethylen, Halogen, Cyan, Nitro und/oder Trifluormethyl substituierten Arylalkyloxyrest mit insgesamt 7 bis 15 Kohlenstoffatomen steht oder für den $-PO(OR^5)_2$ steht, worin

$R^5$ für einen gegebenenfalls durch $C_1$-$C_4$-Alkoxy, Halogen, Cyan, Nitro und/oder Trifluormethyl substituierten Alkylrest mit 1-8 Kohlenstoffatomen oder für einen gegebenenfalls durch $C_1$-$C_4$-Alkoxy, Halogen, Cyano, Nitro und/oder Trifluormethyl substituierten Alkenylrest mit 3 bis 8 Kohlenstoffatomen steht.

Bevorzugt sind insbesondere die Verbindungen der allgemeinen Formel (I), in welcher

R für Wasserstoff, einen gegebenenfalls durch Methoxy, Fluor, Chlor, Cyan und/oder Trifluormethyl substituierten Alkylrest mit 1-8 Kohlenstoffatomen oder für einen gegebenenfalls durch Methoxy, Fluor, Chlor, Cyan und/oder Trifluormethyl substituierten Cycloalkylrest mit 3-8 Kohlenstoffatomen steht und

$R^1$,$R^2$,$R^3$ gleich oder verschieden sind und einzeln für Wasserstoff oder für einen gegebenenfalls durch Methoxy, Fluor und/oder Chlor, substituierten Alkylrest mit 1-3 Kohlenstoffatomen stehen und

$R^4$ für einen gegebenenfalls durch Methoxy, Fluor, Chlor, Cyan, Nitro und/oder Trifluormethyl substituierten Alkoxyrest mit 1-6 Kohlenstoffatomen oder für einen gegebenenfalls durch Methoxy, Fluor, Chlor, Cyan, Nitro oder Trifluormethyl substituierten Alkenyloxyrest mit 3-5 Kohlenstoffatomen oder für einen gegebenenfalls durch Methoxy, Fluor, Chlor, Cyan, Nitro oder Trifluormethyl substituierten Alkinoxyrest mit 3-5 Kohlenstoffatomen oder für einen gegebenenfalls durch Methoxy, 2',3'-Dioxomethylen, 3',4'-Dioxomethylen, Fluor, Chlor, Brom, Cyano, Nitro und/oder Trifluormethyl substituierten Phenoxyrest oder für einen gegebenenfalls durch Methoxy, 2',3'-Dioxomethylen, 3',4'-Dioxomethylen, Fluor, Chlor, Brom, Cyano, Nitro und/oder Trifluormethyl substituierten Arylalkyloxyrest mit insgesamt 7-10 Kohlenstoffatomen steht oder für den $-PO(OR^5)_2$-Rest steht, worin

$R^5$ für einen gegebenenfalls durch Methoxy, Ethoxy, Fluor, Chlor, Cyan, Nitro und/oder Trifluormethyl substituierten Alkylrest mit 1-4 Kohlenstoffatomen oder für einen gegebenenfalls durch Methoxy, Ethoxy, Fluor, Chlor, Cyan, Nitro oder Trifluormethyl substituierten Alkenylrest mit 3-5 Kohlenstoffatomen steht.

Ganz besonders bevorzugt sind die Verbindungen der allgemeinen Formel I,

in welcher

R für Wasserstoff, Methyl, Neopentyl, Cyclopentyl oder Cyclohexyl steht,

$R^1$, $R^2$ und $R^3$ für Wasserstoff stehen und

$R^4$ für Alkoxy mit 1 bis 4 Kohlenstoffatomen, Propargyloxy, Phenoxy oder Benzyloxy oder für den $PO(OR^5)_2$-Rest, worin $R^5$ für Methyl, Ethyl oder 2-Chlorethyl steht.

Verwendet man bei der Verfahrensvariante (a) als Ausgangsstoffe beispielsweise N-Neopentyl-N,N-bis-chlorcarbonyl-amin und Propargylalkohol, so kann die Reaktion dieser Verbindungen durch das folgende Formelschema skizziert werden:

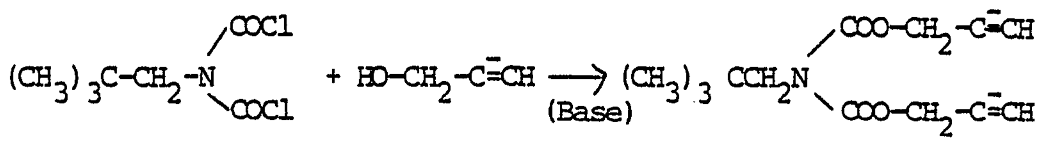


Verwendet man bei der Verfahrensvariante (b) als Ausgangsstoffe beispielsweise N-Neopentyl-N,N-bischlorcarbonylamin, Proparylalkohol und Methanol, so kann die Reaktion dieser Verbindungen durch das folgende Formelschema skizziert werden:

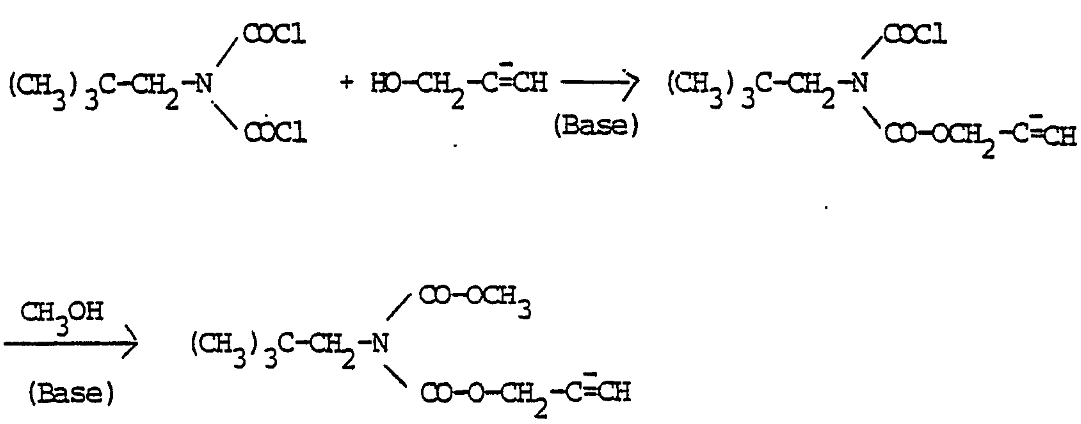

Verwendet man bei der Verfahrensvariante (c) als Ausgangsstoffe beispielsweise N-Neopentyl-N,N-bischlorcarbonylamin, Propargylalkohol und Trimethylphosphit, so kann die Reaktion dieser Verbindungen durch das folgende Formelschema skizziert werden:

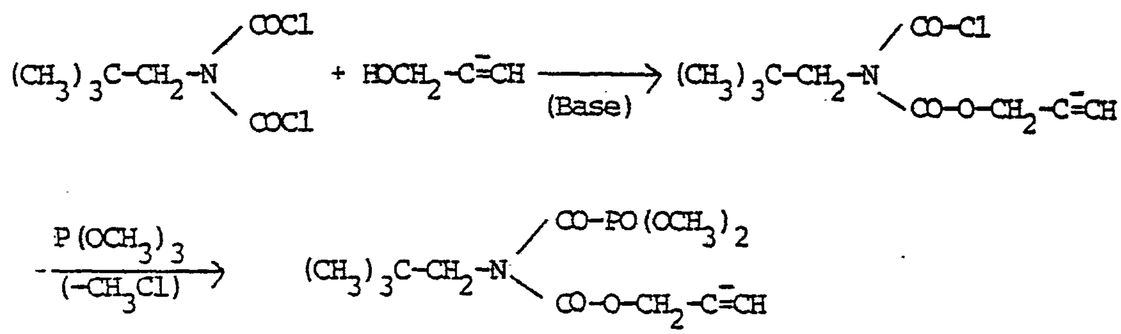


Verwendet man bei der Verfahrensvariante (d) als Ausgangsstoffe beispielsweise N-Methyl-N,N-bischlorcarbonylamin, Methanol und Propargylalkohol, so kann die Reaktion dieser Verbindungen durch das folgende Formelschema skizziert werden:

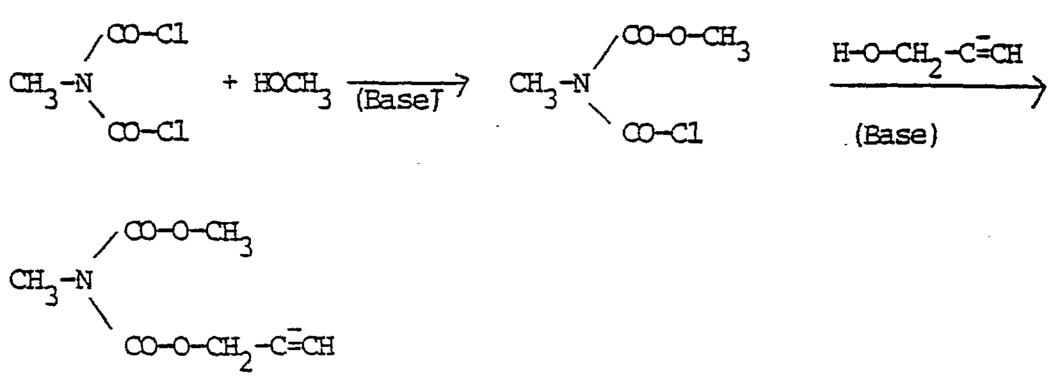

Verwendet man bei der Verfahrensvariante (e) als Ausgangsstoffe beispielsweise Chlorcarbonylisocyanat, Propargylalkohol und Butanol, so kann die Reaktion dieser Verbindungen durch das folgende Formelschema skizziert werden:

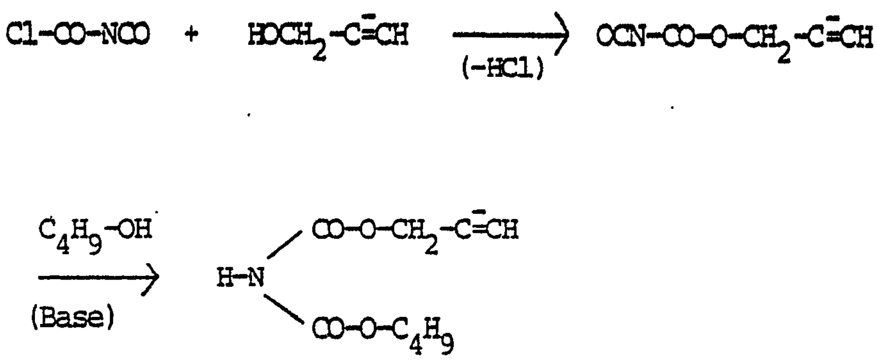


Verwendet man bei der Verfahrensvariante (f) als Ausgangsstoffe beispielsweise Chlorcarbonylisocyanat, Ethanol und Propargylalkohol, so kann die Reaktion dieser Verbindungen durch das folgende Formelschema skizziert werden:

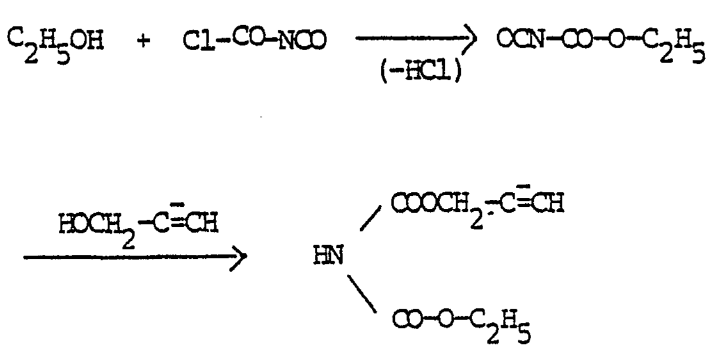

Alle diese Verfahrensvarianten (a-f) können ohne Verdünnungsmittel oder in Gegenwart eines inerten Verdünnungsmittels durchgeführt werden. Als Verdünnungsmittel sind Kohlenwasserstoffe wie z.B. Hexan, chlorierte Kohlenwasserstoffe wie z.B. Methylenchlorid, aromatische Verbindungen wie z.B. Toluol, Ketone wie z.B. Aceton, Nitrile wie z.B. Acetonitril oder Gemische dieser Verdünnungsmittel geeignet.

Bei den Verfahrensvarianten (a-d) setzt man dem Reaktionsgemisch vorteilhafterweise ein Säurebindemittel zu. Hierzu sind anorganische Basen wie Kaliumcarbonat oder tertiäre organische Basen, wie z.B. Triethylamin, Benzyldimethylamin oder Pyridin und Chinolin geeignet.

Bei den Verfahrensvarianten (e) und (f) kann dem Reaktionsgemisch eine Base wie Kaliumcarbonat oder eine tertiäre organische Base wie z.B. Triethylamin, Benzyldimethylamin, Pyridin oder Chinolin zugesetzt werden.

Die Verfahrensvarianten (a) bis (f) können bei Temperaturen zwischen etwa -30 und 120°C vorzugsweise zwischen 0 und 80°C durchgeführt werden.

Die Mengenverhältnisse der Ausgangsstoffe können im üblichen Rahmen variiert werden. Die jeweils angegegeben molaren Mengen müssen nicht genau eingehalten werden, sondern können nach oben oder unten abweichen.

Die Umsetzungen werden üblicherweise unter Normaldruck

durchgeführt. Aber auch die Versuchsführung bei Über- oder Unterdruck kann Vorteile bieten.

Die Verbindungen der Formel (II) sind bekannt und/oder können in üblicher Weise nach an sich bekannten Verfahren und Methoden hergestellt werden (vgl. z.B. DE-A-23 51 556 und G. Zumach und E. Kühle: Synthesis 1970, 542-543, DOS 12 98 095).

Die Verbindungen der Formel (III) sind bekannt und/oder können in üblicher Weise nach an sich bekannten Verfahren und Methoden hergestellt werden (vgl. z.B. Reppe, J. Liebigs Ann. Chem. 596, 1 (1955), W. Ried: Angew. Chemie 76, 973 (1964) W. Ried et al: Chem. Ber. 98, 245 (1965)).

Die neuen Carbamidsäureester der allgemeinen Formel (I) weisen in Mischung mit Arthropodiziden beliebiger Konstitution, starke synergistische Wirkungen auf, welche ihre Verwendung als Schädlingsbekämpfungsmittel ermöglicht.

Bevorzugt werden die neuen Carbamidsäurester der allgemeinen Formel (I) zusammen mit den Arthropodiziden der Gruppen

1) Carbamidsäureestern und/oder

2) Carbonsäureestern einschließlich der natürlichen sowie synthetischen Pyrethroide und/oder

3) Phosphorverbindungen, wie Phosphorsäure- und Phosphonsäureestern, einschließlich der Thio- und Dithioverbindungen und/oder

4) Halogen-(cyclo)-alkanen, wie z.B. Hexachlorcyclohexan

verwendet.

Überraschenderweise ist die Wirkung der neuen erfindungsgemäßen Wirkstoffkombinationen gegen Arthropoden wesentlich höher als die Wirkung der Einzelkomponenten bzw. die Summe der Wirkungen der Einzelkomponenten. Die erfindungsgemäßen Carbamidsäureester zeigen außerdem ausgezeichnete synergistische Wirksamkeit nicht nur bei einer Wirkstoffklasse, sondern auch Wirkstoffen aus den verschiedensten chemischen Stoffgruppen.

Die synergistische Wirkung der Verbindungen der Formel (I) zeigt sich besonders bevorzugt bei

1) Carbamidsäureestern der Formel (XI)

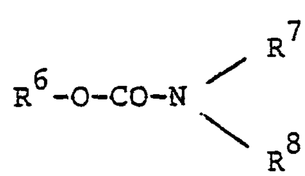

(XI)

in welcher

$R^6$ für einen gegebenenfalls substituierten carbocyclischen oder heterocyclischen aromatischen Rest oder für einen gegebenenfalls substituierten Oximrest steht (wobei die weiter unten erläuterterten Reste $R^6$ bevorzugt werden),

$R^7$ für $C_1$-$C_4$-Alkyl steht und

$R^8$ für Wasserstoff, $C_1$-$C_4$-Alkyl oder für einen Rest Y steht, wobei

Y für den Rest $-CO-R^9$ steht, worin

$R^9$ für Halogen, $C_1$-$C_4$-Alkyl, $C_1$-$C_4$-Alkoxy, $C_3$-$C_5$-Alkenoxy, $C_3$-$C_5$-Alkinoxy, $C_1$-$C_4$-Alkylthio, $C_1$-$C_4$-Alkyl-amino, Di-$C_1$-$C_4$-Alkylamino, $C_1$-$C_4$-Alkyl-hydroxylamino,

für gegebenenfalls durch Halogen, Nitro, Cyano, Trifluormethyl, $C_1$-$C_4$-Alkyl, $C_1$-$C_4$-Alkoxy, $C_1$-$C_4$-Alkylendioxy, $C_1$-$C_4$-Alkylthio, $C_1$-$C_4$-Alkoxy-carbonyl substituiertes Phenoxy, Phenylthio oder Phenylamino, für 2,3-Dihydro-2,2-dimethyl-7-benzofuranyl oder für den Rest

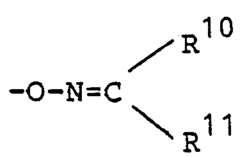

steht, worin

$R^{10}$ für Wasserstoff, $C_1$-$C_4$-Alkyl oder Di-$C_1$-$C_4$-alkyl-amino-carbonyl steht und

$R^{11}$ für $C_1$-$C_4$-Alkyl, $C_1$-$C_4$-Alkylthio, Cyano-$C_1$-$C_4$-alkylthio, $C_1$-$C_4$-Alkylthio-$C_1$-$C_4$-alkyl steht,

oder die beiden Reste $R^{10}$ und $R^{11}$ zusammen für gegebenenfalls durch Sauerstoff, Schwefel, SO oder $SO_2$ unterbrochenes $C_2$-$C_8$-Alkandiyl stehen, oder

in welcher

Y für den Rest $-S_n(O)_m-R^{12}$ steht, worin

n für 1 oder 2 und

m für 0, 1 oder 2 stehen und

$R^{12}$ für gegebenenfalls durch Halogen substituiertes $C_1$-$C_4$-Alkyl, $C_3$-$C_5$-Alkenyl, $C_3$-$C_5$-Alkinyl oder $C_3$-$C_6$-Cycloalkyl, für gegebenenfalls durch Halogen, Cyano, Nitro, Trifluormethyl, Trifluormethoxy, Trifluormethylthio, $C_1$-$C_4$-Alkyl oder $C_1$-$C_4$-Alkoxy substituiertes Phenyl, Benzyl oder Phenylethyl oder für den Rest

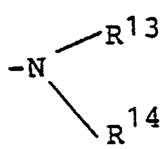

steht, worin

$R^{13}$ für $C_1$-$C_4$-Alkyl, $C_3$-$C_5$-Alkenyl, $C_3$-$C_5$-Alkinyl, $C_3$-$C_6$-Cycloalkyl oder Benzyl steht und

$R^{14}$ für $C_1$-$C_4$-Alkyl, $C_3$-$C_5$-Alkenyl, $C_3$-$C_5$-Alkinyl, $C_3$-$C_6$-Cycloalkyl, Benzyl, Phenylethyl, Halogen-carbonyl, Formyl, $C_1$-$C_4$-Alkyl-carbonyl, $C_1$-$C_4$-Alkoxy-carbonyl, $C_1$-$C_4$-Alkoxyphenoxy-carbonyl, $C_3$-$C_5$-Alkinoxy-carbonyl, $C_3$-$C_5$-Alkenoxycarbonyl, $C_1$-$C_4$-Alkylthiocarbonyl, $C_1$-$C_4$-Alkyl-amino-carbonyl, $C_1$-$C_4$-Alkyl-hydroxylamino-carbonyl, $C_1$-$C_{10}$-Alkyl-phenoxycarbonyl, Di-$C_1$-$C_4$-alkyl-amino-carbonyl, Phenylthiocarbonyl, Phenoxycarbonyl, 2,3-Dihydro-2,2-dimethyl-7-benzofuranyloxycarbonyl, für gegebenenfalls durch Halogen, Cyano, Nitro, Trifluormethyl, $C_1$-$C_{10}$-Alkyl oder $C_1$-$C_4$-Alkoxy substituiertes Phenylsulfenyl, Phenylsulfinyl, Phenylsulfonyl oder Phenyl steht, oder für den Rest

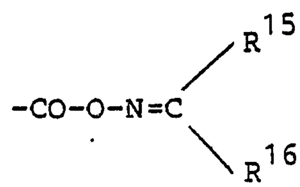

steht, worin

$R^{15}$ die oben für $R^{10}$ angegebene Bedeutung und

$R^{16}$ die oben für $R^{11}$ angegebene Bedeutung hat,

wobei ferner im Rest 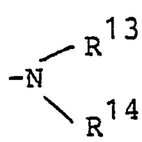 die Reste $R^{13}$ und $R^{14}$ zusammen für eine gegebenenfalls durch Sauerstoff oder

Schwefel unterbrochene Kohlenwasserstoffkette mit 3 bis 8 Kohlenstoffatomen stehen, worin weiter $R^{12}$ auch für den gleichen Rest stehen kann, an den der Rest $-S_n(O)_m-R^{12}$ gebunden ist.

Als Wirkstoffkomponenten ganz besonders bevorzugt sind Carbamidsäureester der Formel (XI), in welcher

$R^6$ für gegebenenfalls durch $C_1$-$C_4$-Alkyl, $C_2$-$C_4$-Alkenyl, $C_1$-$C_4$-Alkoxy, $C_1$-$C_4$-Alkoxy-methyl, $C_1$-$C_4$-Alkylthio, $C_1$-$C_4$-Alkylthio-methyl, $C_1$-$C_4$-Alkylamino, Di-($C_1$-$C_4$-alkyl)-amino, Di-($C_3$-$C_4$-alkenyl)-amino, Halogen, Dioxolanyl, Methylendioxy und/oder durch den Rest $-N{=}CH{-}N(CH_3)_2$ substituierte Reste aus der Reihe Phenyl, Naphthyl, 2,3-Dihydro-7-benzofuranyl, Pyrazolyl oder Pyrimidinyl steht, oder in welcher

$R^6$ für einen Alkylidenaminorest der Formel (XIa)

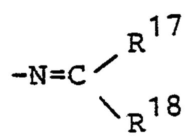

(XIa)

steht, in welcher

$R^{17}$ und $R^{18}$ die oben für $R^{10}$ bzw. $R^{11}$ angegebene Bedeutung haben, und

$R^7$ für $C_{1-4}$-Alkyl steht und

$R^8$ für Wasserstoff oder $C_1$-$C_4$-Alkyl (vorzugsweise für Wasserstoff) steht.

Als Beispiele für die Carbamidsäureester der Formel (XI) seien genannt: 2-Methyl-phenyl-, 2-Ethyl-phenyl-, 2-iso-Propyl-phenyl-, 2-sec-Butyl-phenyl-, 2-Methoxy-phenyl-, 2-Ethoxy-phenyl-, 2-iso-Propoxy-phenyl-, 4-Methyl-phenyl-, 4-Ethyl-phenyl-, 4-n-Propyl-phenyl-, 4-Methoxy-phenyl-, 4-Ethoxy-phenyl-, 4-n-Propoxy-phenyl-, 3,4,5-Trimethyl-phenyl-, 3,5-Dimethyl-4-methylthio-phenyl-, 3-Methyl-4-dimethylaminophenyl-, 2-Ethylthiomethyl-phenyl-, 1-Naphthyl-, 2,3-Dihydro-2,2-dimethyl-7-benzofuranyl, 2,3-(Dimethyl-methylendioxy)-phenyl-, 2-(4,5-Dimethyl-1,3-dioxolan-2-yl)-phenyl-, 1-Methylthio-ethyliden-amino-, 2-Methylthio-2-methylpropylidenamino-, 1-(2-Cyano-ethylthio)-ethylidenamino- und 1-Methylthiomethyl-2,2-dimethylpropylidenamino-N-methyl-carbamidsäureester.

Die synergistische Wirkung der Verbindungen der Formel (I) zeigt sich weiter bevorzugt bei

2) Carbonsäureestern der Formel (XII)

$$R^{19}\text{-CO-O-}\underset{}{\overset{R^{20}}{\overset{|}{C}}}\text{H-}R^{21} \qquad \text{(XII)}$$

in welcher

$R^{19}$ für einen offenkettigen oder cyclischen Alkylrest steht, der gegebenenfalls substituiert ist durch Halogen, Alkyl, Cycloalkyl, durch gegebenenfalls durch Halogen, Alkyl und/oder Alkoxy substituiertes Alkenyl, durch Phenyl oder Styryl, welche gegebenenfalls durch Halogen, gegebenenfalls Halogen-substituierte Reste aus der Reihe Alkyl, Alkoxy, Alkylendioxy und/oder Alkylthio substituiert sind, durch spirocyclisch verknüpftes, gegebenenfalls Halogen-substituiertes Cycloalk(en)yl, welches gegebenenfalls benzannelliert ist, in welcher weiter

$R^{20}$ für Wasserstoff, Alkyl, Halogenalkyl, Alkenyl, Alkinyl oder Cyano steht, und

$R^{21}$ für einen gegebenenfalls substituierten Alkyl- oder Arylrest oder für einen Heterocyclus steht, oder zusammen mit $R^{20}$ und dem Kohlenstoffatom, an das beide Reste gebunden sind, einen Cyclopentenonring bildet.

Ganz besonders als Wirkstoffkomponenten bevorzugt sind Carbonsäureester der Formel (XII), in welcher

$R^{19}$ für den Rest

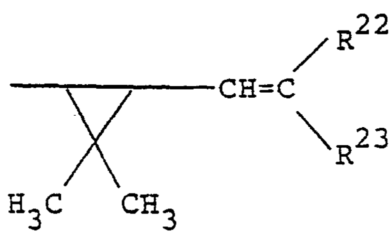

steht, worin

$R^{22}$ für Wasserstoff, Methyl, Fluor, Chlor oder Brom und

$R^{23}$ für Methyl, Fluor, Chlor, Brom, $C_1$-$C_2$-Fluoralkyl oder $C_1$-$C_2$-Chlorfluoralkyl oder für gegebenenfalls durch Halogen und/oder gegebenenfalls Halogen-substituierte Reste der Reihe $C_1$-$C_4$-Alkyl, $C_1$-$C_4$-Alkoxy, $C_1$-$C_4$-Alkylthio und/oder $C_1$-$C_2$-Alkylendioxy substituiertes Phenyl steht, oder worin beide Reste $R^{22}$ und $R^{23}$ für $C_2$-$C_5$-Alkandiyl (Alkylen) stehen; oder in welcher

$R^{19}$ für den Rest $-\underset{\substack{| \\ R^{25}}}{CH}-R^{24}$ steht, worin

$R^{24}$ für gegebenenfalls durch Halogen und/oder durch gegebenenfalls Halogen-substituierte Reste der Reihe $C_1$-$C_4$-Alkyl, $C_1$-$C_4$-Alkoxy, $C_1$-$C_4$-Alkylthio oder $C_1$-$C_2$-Alkylendioxy substituiertes Phenyl steht und

$R^{25}$ für Isopropyl oder Cyclopropyl steht;

oder in welcher

$R^{19}$ für einen der Reste

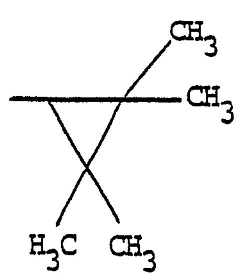

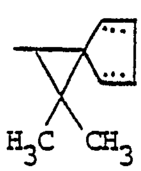

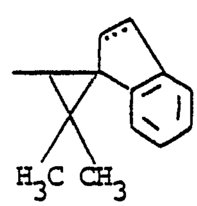

wobei die gepunkteten Linien mögliche Doppelbindungen andeuten sollen, oder für Methyl steht, und in welcher weiter

$R^{20}$ für Wasserstoff, $C_1$-$C_4$-Alkyl, $C_1$-$C_4$-Halogenalkyl, Cyano oder Ethinyl steht und

$R^{21}$ gegebenenfalls durch Halogen substituierte Reste der Reihe Phenyl, Furyl oder Tetrahydrophthalimido steht, wobei diese Reste ihrerseits substituiert sein können durch gegebenenfalls durch Halogen und/oder durch einen gegebenenfalls Halogen-substituierten Rest der Reihe $C_1$-$C_4$-Alkyl, $C_2$-$C_4$-Alkenyl, $C_1$-$C_4$-Alkoxy, $C_2$-$C_4$-Alkenoxy, $C_1$-$C_4$-Alkylthio, $C_1$-$C_2$-Alkylendioxy, Phenoxy und/oder Benzyl, wobei für $R^{21}$ vorzugsweise Pentafluorphenyl, 3,4-Dichlorphenyl, Phenoxyphenyl, welches in einem oder beiden Phenylringen durch Halogen substituiert sein kann oder für Tetrahydrophthalimido steht.

Weiter sind die natürlich vorkommenden Pyrethroide (wie Pyrethrum) als Carbonsäureester der Formel (XII) besonders bevorzugt.

Als Beispiele für die Carbonsäureester der Formel (XII) seien genannt:

Essigsäure-(2,2,2-trichlor-1-(3,4-dichlor-phenyl)-ethyl)-ester, 2,2-Dimethyl-3-(2-methyl-propen-1-yl)-cyclopropan-carbonsäure-(3,4,5,6-tetrahydro-phthalimido-methyl)-ester, 2,2-Dimethyl-3-(2,2-dichlorvinyl)-cyclopropan-carbonsäure-(3-phenoxy-benzyl)-ester, 2,2-Dimethyl-3-(2,2-dichlorvinyl)-cyclopropan-carbonsäure-(α-cyano-3-phenoxy-benzyl)-ester, 2,2-Dimethyl-3-(2,2-dichlorvinyl)-cyclopropancarbonsäure-(α-cyano-4-fluor-3-phenoxy-benzyl)-ester, 2,2-Dimethyl-3-(2,2-dichlorvinyl)-cyclopropancarbonsäure-(pentafluor-benzyl)-ester, 2,2-Dimethyl-3-(2,2-dibromvinyl)-cyclopropancarbonsäure-(α-cyano-3-phenoxy-benzyl)-ester und 3-Methyl-2-(4-chlor-phenyl)-butansäure-(α-cyano-3-phenoxy-benzyl)-ester.

Weiter zeigt sich die synergistische Wirkung der Verbindungen der allgemeinen Formel I bevorzugt bei

3) Phosphorsäure- und Phosphonsäureestern der allgemeinen Formel (XIII)

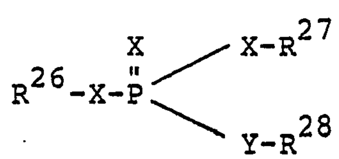

(XIII)

in welcher

X jeweils für O oder S steht und

Y für O, S, -NH- oder für eine direkte Bindung zwischen dem zentralen P-Atom und $R^{28}$ steht und

$R^{26}$ und $R^{27}$ gleich oder verschieden sind und für gegebenenfalls substituiertes Alkyl oder Aryl stehen,

$R^{28}$ für Wasserstoff gegebenenfalls substituiertes Alkyl, Aryl, Heteroaryl, Aralkyl, Alkenyl, Dioxanyl oder einen Oximrest oder für den gleichen Rest steht, an den es gebunden ist.

Besonders bevorzugt sind Phosphorsäure- und Phosphonsäureester der Formel (XIII), in welcher

$R^{26}$ und $R^{27}$ gleich oder verschieden sind und für $C_1$-$C_4$-Alkyl oder Phenyl stehen,

$R^{28}$ für Wasserstoff, Alkyl mit 1 bis 4 Kohlenstoffatomen steht, das gegebenenfalls durch Halogen, Hydroxyl, Cyano, gegebenenfalls Halogen-substituiertes Phenyl, Carbamoyl, Alkylsulfonyl, Alkylsulfinyl, Alkylcarbonyl, Alkoxy, Alkylmercapto, Alkoxycarbonyl, Alkylaminocarbonyl, letztere mit jeweils bis zu 6 Kohlenstoffatomen, substituiert ist, für Alkenyl mit bis zu 4 Kohlenstoffatomen, das gegebenenfalls durch Halogen, gegebenenfalls Halogen-substituiertes Phenyl oder $C_1$-$C_4$-Alkoxycarbonyl substituiert ist, oder für den Rest der allgemeinen Formel (XIIIa)

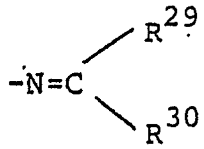

(XIIIa)

wobei $R^{29}$ und $R^{30}$ die oben für $R^{10}$ bzw. $R^{11}$ angegebene Bedeutung besitzen, oder für Cyano oder Phenyl stehen, und in welcher

$R^{28}$ ferner für Dioxanyl, das durch denselben Rest substituiert ist, an den $R^{28}$ gebunden ist, oder $R^{28}$ für den gleichen Rest, an den es gebunden ist, oder $R^{28}$ für Phenyl, das gegebenenfalls durch Methyl, Nitro, Cyano, Halogen und/oder Methylthio substituiert ist steht und $R^{28}$ außerdem besonders bevorzugt für gegebenenfalls durch $C_1$-$C_4$-Alkoxy, $C_1$-$C_4$-Alkylthiomethyl, $C_1$-$C_4$-Alkyl und/oder Halogen-substituierte heteroaromatische Reste, wie Pyridinyl, Chinolinyl, Chinoxalinyl, Pyrimidinyl oder Benzo-1,2,4-triazinyl steht.

Im einzelnen seien genannt:

O,O-Dimethyl- bzw. O,O-Diethyl-O-(2,2-dichlor- bzw. 2,2-dibromvinyl)-phosphorsäureester,
O,O-Diethyl-O-(4-nitro-phenyl)-thionophosphorsäureester
O,O-Dimethyl-O-(3-methyl-4-methylthio-phenyl)-thionophosphorsäureester
O,O-Dimethyl-O-(3-methyl-4-nitro-phenyl)-thionophosphorsäureester,

O-Ethyl-S-n-propyl-O-(2,4-dichlorphenyl)-thionophosphorsäureester,
O-Ethyl-S-n-propyl-O-(4-methylthio-phenyl)-thionophosphorsäureester,
O,O-Dimethyl-S-(4-oxo-1,2,3-benzothriazin(3)yl-methyl)-thionothiolphosphorsäureester,
O-Methyl-O-(2-iso-propyl-6-methoxy-pyrimidin(4)yl)-thionomethanphosphonsäureester,
O,O-Diethyl-O-(2-iso-propyl-6-methyl-pyrimidin(4)yl)-thionophosphorsäureester,
O,O-Diethyl-O-(3-chlor-4-methyl-cumarin(7)yl)-thionophosphorsäureester,
O,O-Dimethyl-2,2,2-trichlor-1-hydroxy-ethan-phosphonsäureester,
O,O-Dimethyl-S-(methylaminocarbonyl-methyl)-thionophosphorsäureester.

Weiterhin zeigt sich die synergistische Wirkung der Verbindungen der allgemeinen Formel I bevorzugt bei

4) Halogen(cyclo)-alkanen, wie z.B. Hexachlorcyclohexan, 1,1,1-Trichlor-2,2-bis-(4-chlorphenyl)-ethan, 1,1,1-Trichlor-2,2-bis-(4-methoxyphenyl)-ethan und 1,1-Dichlor-2,2-bis-(4-ethylphenyl)-ethan.

Die Gewichtsverhältnisse der Synergisten und Wirkstoffe können in einem relativ großen Bereich variiert werden. Im allgemeinen werden die als Synergisten verwendeten Verbindungen der Formel (I) mit den übrigen Wirkstoffen

in Mischungsverhältnissen zwischen 1 : 100 und 100 : 1, vorzugsweise zwischen 1 : 5 und 5 : 1 (Gewichtsteile) eingesetzt.

Die erfindungsgemäßen Wirkstoffkombinationen besitzen nicht nur eine schnelle knock-down-Wirkung, sondern bewirken auch die nachhaltige Abtötung der tierischen Schädlinge, insbesondere von Insekten und Milben, die in der Landwirtschaft, in Forsten, im Vorrats- und Materialschutz sowie im Hygienebereich vorkommen. Sie sind gegen normal sensible und resistente Arten sowie gegen alle oder einzelne Entwicklungsstadien wirksam.

Zu den tierischen Schädlingen, welche unter Verwendung der Verbindungen der Formel (I) bekämpft werden können, gehören beispielsweise:

Aus der Ordnung der Isopoda z.B. Oniscus asellus, Porcellio scaber.
Aus der Ordnung der Thysanura z.B. Lepisma saccharina.
Aus der Ordnung der Orthoptera z.B. Blatta orientalis, Periplaneta maericana, Leucophaea maderae, Blattella germanica, Acheta domesticus, Gryllotalpa spp., Locusta migratoria migratorioides, Schistocerca gregaria.
Aus der Ordnung der Dermaptera z.B. Forficula auricularia.
Aus der Ordnung der Isoptera z.B. Reticulitermes spp.
Aus der Ordnung der Anoplura z.B. Pediculus humanus corporis, Haematopinus spp., Linograthus spp.

Aus der Ordnung der Mallophaga z.B. Trichodectes spp., Damalinea spp.

Aus der Ordnung der Heteroptera z.B. Cimex lectularius, Rhodnius prolixus, Triatoma spp.

Aus der Ordnung der Homoptera z.B. Myzus spp., und Psylla spp..

Aus der Ordnung der Lepidoptera z.B. Ephestia kuehniella und Galleria mellonella.

Aus der Ordnung der Coleoptera z.B. Anobium punctatum, Rhizopertha dominica, Bruchidius obtectus, Acanthoscelides obtectus, Hylotrupes bejulus, Oryzaephilus surinamensis, Sitophilus spp., Dermestes spp., Trogoderma spp., Anthrenus spp., Attagenus spp., Lyctus spp., Ptinus spp., Niptus hololeucus, Gibbium psylloides, Tribolium spp. und Tenebrio molitor.

Aus der Ordnung der Hymenoptera z.B. Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Gastrophilus spp., Hyppobosca spp., Stomoxys spp., Oestrus spp., Hypoderma spp. und Tabanus spp.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae,

Boophilus spp., Rhipicephalus spp., Amblyomma spp., Hyalomma spp., Ixodes spp., Psoroptes spp., Chorioptes spp., Sarcoptes spp.

Die Wirkstoffkombinationen aus den Verbindungen der Formel (I) und den übrigen Wirkstoffen können in die üblichen Formulierungen übergeführt werden, wie Lösungen, Emulsionen, Spritzpulver, Suspensionen, Pulver, Stäubemittel, Schäume, Pasten, lösliche Pulver, Aerosole, Suspensions-Emulsionskonzentrate, Wirkstoffimprägnierte Natur- und synthetische Stoffe, Feinstverkapselungen in polymeren Stoffen, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffgemische mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie

Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol, sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel: nichtionogene und anionische Emulgatoren, wie Polyoxyethylen-Fettsäure-Ester, Polyoxyethylen-Fettalkohol-Ether, z.B. Alkylaryl-polyglykol-ether, Alkylsulfonate; als Dispergiermittel: z.B. Lignin, Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe, und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffkombination, vorzugsweise zwischen 0,5 und 90 %.

Die Anwendung der erfindungsgemäßen Wirkstoffkombinationen erfolgt in Form ihrer handelsüblichen Formulierungen und/oder den aus diesen Formulierungen bereiteten Anwendungsformen.

Der gesamte Wirkstoffgehalt (einschließlich Synergist) der aus den handelsüblichen Formulierungen bereiteten Anwendungsformen kann in weiten Bereichen variieren. Die Wirkstoffkonzentration der Anwendungsformen kann von 0,001 bis zu 100 Gew.-% Wirkstoffkombination, vorzugsweise zwischen 0,01 und 10 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffkombinationen durch eine hervorragende Resudualwirkung auf Holz und Ton sowie durch eine gute Alkalistabilität auf gekälkten Unterlagen aus.

Anhand der folgenden Beispiele soll die Wirksamkeit der erfindungsgemäß verwendbaren Verbindungen der Formel (I) erläutert werden:

$LT_{100}$-Test-Versuchsdurchführung

Testtiere: Musca domestica Stamm Weymanns (gegen Carbamidsäureester und P-Ester resistent)

Lösungsmittel: Aceton

Von den Wirkstoffen, Synergisten und Gemischen aus Wirkstoffen und Synergisten werden Lösungen hergestellt und 2,5 ml davon in Petrischalen und Filterpapierscheiben von 9,5 cm Durchmesser pipetiert. Das Filterpapier saugt die Lösungen auf. Die Petrischalen bleiben so lange offen stehen, bis das Lösungsmittel vollständig verdunstet ist. Anschließend gibt man 25 Testtiere in die Petrischalen und bedeckt sie mit einem Glasdeckel.

Der Zustand der Tiere wird bis zu 6 Stunden fortlaufend kontolliert.
Es wird diejenige Zeit ermittelt, die für eine 100 %ige knock down-Wirkung erforderlich ist. Wird die $LT_{100}$ nach 6 Stunden nicht erreicht, wird der % Satz der knock down gegangenen Tiere festgestellt.

Die eingesetzten Arthropodizide und Synergisten, die Konzentrationen der Wirkstoffe, Synergisten und Gemische sowie ihre Wirkungen gehen aus den nachfolgenden Tabellen hervor:

Tabelle I (im Test eingesetzte Arthropodizide

A.) 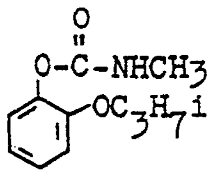 (Propoxur)

B.) 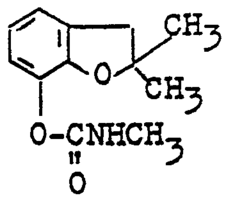 (Carbofuran)

C.) 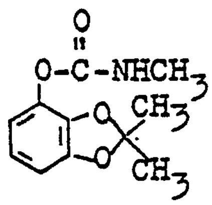 (Bendiocarb)

D.) 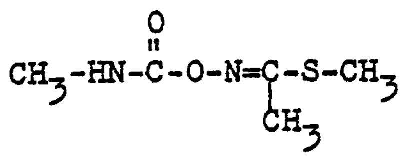 (Methomyl)

E.) Pyrethrine natürlicher Herkunft als 25 %iger Extrakt

F.) 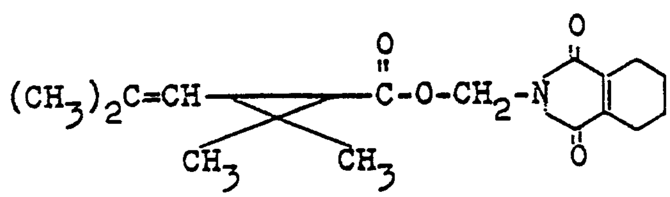 (Tetramethrin)

G.) 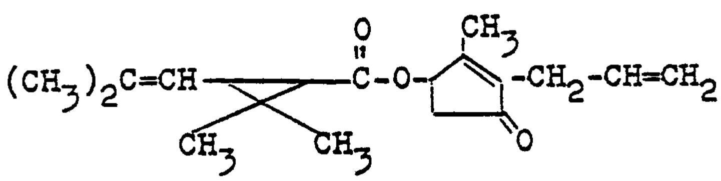 (Bioallethrin)

I.) 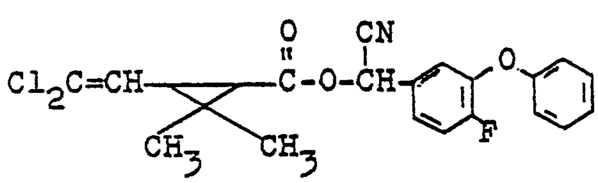 (Cyfluthrin)

K.) 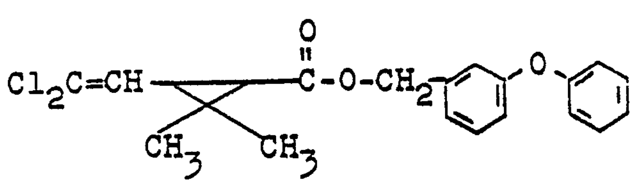 (Permethrin)

L.) 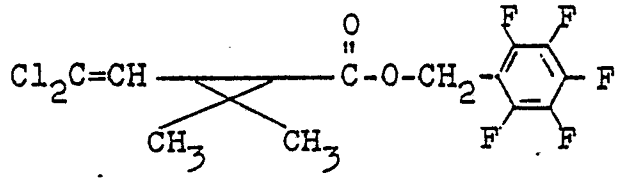 (Fenfluthrin)

M.) 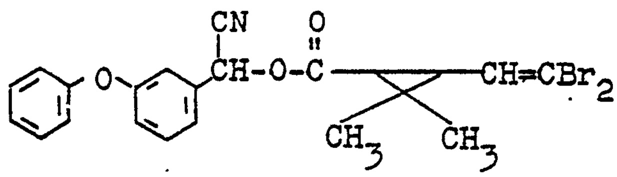 (Decamethrin)

N.) 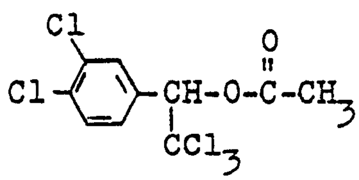 (Penfenate)

O.) 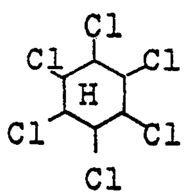 (γ-Hexachlorcyclohexan)

P.) 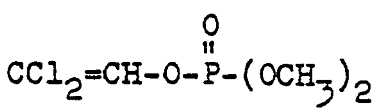 (DDVP)

Q.) 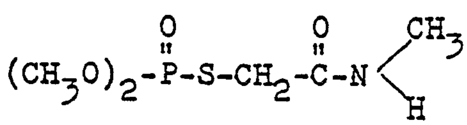 (Omethoat)

T.) 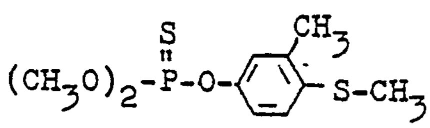 (Fenthion)

U.) 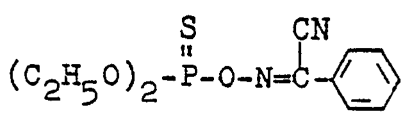 (Phoxim)

V.) 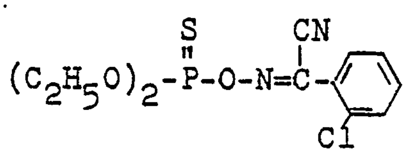 (Chlorphoxim)

W.) 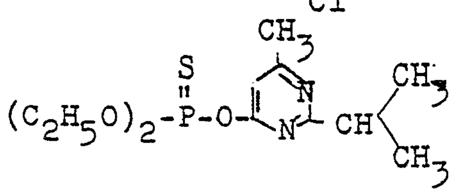 (Diazinon)

Tabelle II (im Test eingesetzte Synergisten

1.) 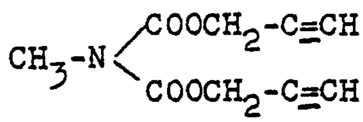

2.) 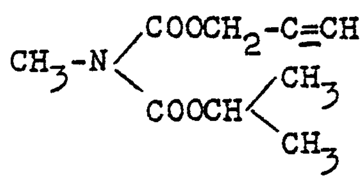

3.) 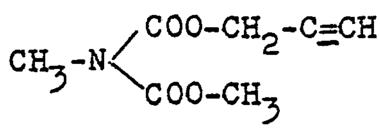

4.) 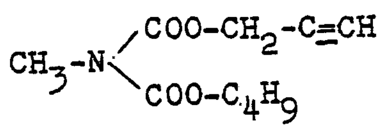

5.) 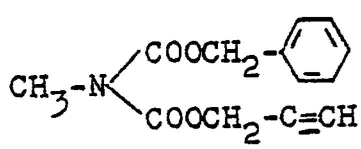

6.) 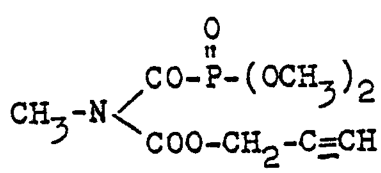

7.) 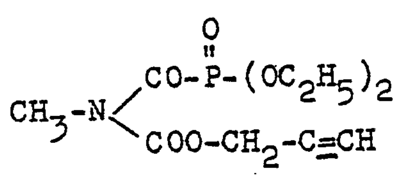

8.) 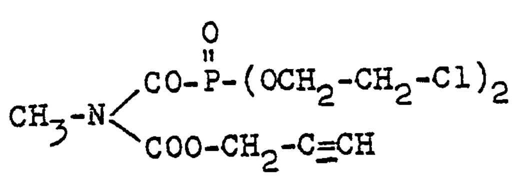

9.) 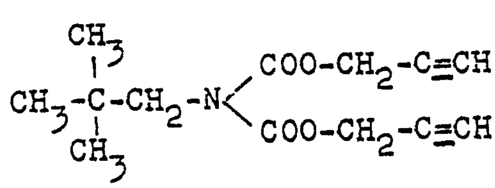

10.) 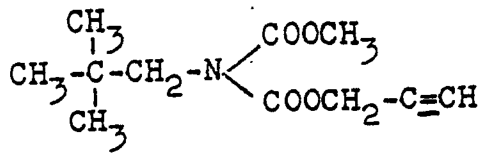

11.) 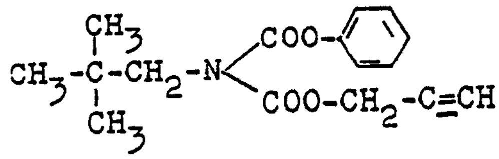

12.) 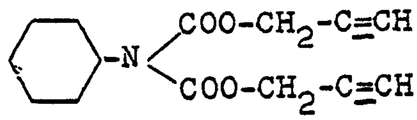

13.) 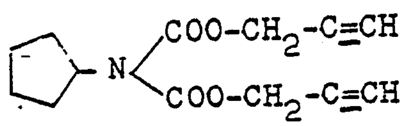

Tabelle III (Versuchsergebnisse)

| Arthropodizid Kennbuchstabe (vgl. Tab. I) | + Synergist (vgl. Tab. II) | Konzentrationen in % Wirkstoff | + Synergist | LT 100 nach Minuten bzw. % nach 360' |
|---|---|---|---|---|
| A.) | - | 1,0 | - | 360'=10 % |
| B.) | - | 1,0 | - | 360'=25 % |
| C.) | - | 1,0 | - | 360'= 0 % |
| D.) | - | 0,2 | - | 360'=95 % |
| E.) | - | 0,04 | - | 360'=65 % |
| F.) | - | 0,04 | - | 360'= 0 % |
| G.) | - | 0,04 | - | 90' |
| I.) | - | 0,04 | - | 60' |
| K.) | - | 0,04 | - | 150' |
| L.) | - | 0,0016 | - | 60' |
| M.) | - | 0,008 | - | 75' |
| N.) | - | 1,0 | - | 360'=50 % |
| O.) | - | 0,04 | | 105' |
| P.) | - | 0,008 | - | 210' |
| Q.) | - | 0,04 | - | 360'=45 % |
| T.) | - | 0,2 | - | 360'=90 % |
| U.) | - | 1,0 | - | 360'=90 % |
| V.) | - | 1,0 | - | 360'=20 % |
| W.) | - | 0,04 | - | 360'=65 % |
| - | 1.) | - | 1,0 | 360'= 0 % |
| - | 2.) | - | 0,2 | 360'= 0 % |
| - | 3.) | - | 1,0 | 360'=40 % |
| - | 4.) | - | 0,2 | 360'=10 % |
| - | 5.) | - | 1,0 | 360'= 0 % |
| - | 6.) | - | 1,0 | 360'= 0 % |

Tabelle III (Fortsetzung)

| Arthropodizid Kennbuchstabe (vgl. Tab. I) | + Synergist (vgl. Tab. II) | Konzentrationen in % Wirkstoff + Synergist | LT 100 nach Minuten bzw. % nach 360' |
|---|---|---|---|
| - | 7.) | - 1,0 | 360'= 0 % |
| - | 8.) | - 1,0 | 360'= 0 % |
| - | 9.) | - 1,0 | 360'= 0 % |
| - | 10.) | - 0,2 | 360'=90 % |
| - | 11.) | - 1,0 | 360'= 0 % |
| - | 12.) | - 1,0 | 360'= 0 % |
| - | 13.) | - 1,0 | 360'= 0 % |
| - | 14.) | - 1,0 | 360'= 0 % |
| A | + 1 | 0,2 + 0,2 | 105' |
| A | + 2 | 0,04 + 0,04 | 90' |
| A | + 3 | 0,04 + 0,04 | 180' |
| A | + 4 | 0,04 + 0,04 | 120' |
| A | + 5 | 0,2 + 0,2 | 210' |
| A | + 6 | 0,04 + 0,04 | 240' |
| A | + 7 | 0,2 + 0,2 | 150' |
| A | + 8 | 0,2 + 0,2 | 180' |
| A | + 9 | 0,04 + 0,04 | 75' |
| A | + 10 | 0,04 + 0,04 | 75' |
| A | + 11 | 0,04 + 0,04 | 180' |
| A | + 12 | 0,2 + 0,2 | 150' |
| A | + 13 | 0,04 + 0,04 | 180' |
| B | + 1 | 0,04 + 0,04 | 150' |
| B | + 2 | 0,04 + 0,04 | 75' |

Tabelle III (Fortsetzung)

| Arthropodizid Kennbuchstabe (vgl. Tab. I) | + Synergist (vgl. Tab. II) | | Konzentrationen in % Wirkstoff + Synergist | | | LT 100 nach Minuten bzw. % nach 360' |
|---|---|---|---|---|---|---|
| B | + | 3 | 0,04 | + | 0,04 | 105' |
| B | + | 4 | 0,04 | + | 0,04 | 75' |
| B | + | 5 | 0,2 | + | 0,2 | 240' |
| B | + | 6 | 0,04 | + | 0,04 | 210' |
| B | + | 7 | 0,04 | + | 0,04 | 180' |
| B | + | 8 | 0,2 | + | 0,2 | 120' |
| B | + | 9 | 0,04 | + | 0,04 | 60' |
| B | + | 10 | 0,04 | + | 0,04 | 45' |
| B | + | 11 | 0,04 | + | 0,04 | 150' |
| B | + | 12 | 0,04 | + | 0,04 | 120' |
| B | + | 13 | 0,04 | + | 0,04 | 180' |
| C | + | 1 | 0,04 | + | 0,04 | 180' |
| C | + | 2 | 0,04 | + | 0,04 | 105' |
| C | + | 3 | 0,04 | + | 0,04 | 180' |
| C | + | 4 | 0,04 | + | 0,04 | 105' |
| C | + | 5 | 0,2 | + | 0,2 | 210' |
| C | + | 6 | 0,2 | + | 0,2 | 240' |
| C | + | 7 | 0,2 | + | 0,2 | 180' |
| C | + | 8 | 0,2 | + | 0,2 | 210' |
| C | + | 9 | 0,04 | + | 0,04 | 75' |
| C | + | 10 | 0,04 | + | 0,04 | 90' |
| C | + | 11 | 0,2 | + | 0,2 | 150' |
| C | + | 12 | 0,04 | + | 0,04 | 180' |
| C | + | 13 | 0,2 | + | 0,2 | 150' |

Tabelle III (Fortsetzung)

| Arthropodizid Kennbuchstabe (vgl. Tab. I) | + Synergist (vgl. Tab. II) | | Konzentrationen in % Wirkstoff + Synergist | | | LT 100 nach Minuten bzw. % nach 360' |
|---|---|---|---|---|---|---|
| D | + | 1 | 0,2 | + | 0,2 | 120' |
| D | + | 2 | 0,2 | + | 0,2 | 75' |
| D | + | 3 | 0,2 | + | 0,2 | 105' |
| D | + | 4 | 0,2 | + | 0,2 | 90' |
| D | + | 5 | 0,2 | + | 0,2 | 150' |
| D | + | 6 | 0,2 | + | 0,2 | 105' |
| D | + | 7 | 0,2 | + | 0,2 | 105' |
| D | + | 8 | 0,2 | + | 0,2 | 105' |
| D | + | 9 | 0,04 | + | 0,04 | 120' |
| D | + | 10 | 0,2 | + | 0,2 | 105' |
| D | + | 11 | 0,2 | + | 0,2 | 150' |
| D | + | 12 | 0,2 | + | 0,2 | 75' |
| D | + | 13 | 0,2 | + | 0,2 | 105' |
| E | + | 2 | 0,04 | + | 0,04 | 75' |
| E | + | 3 | 0,04 | + | 0,04 | 75' |
| E | + | 4 | 0,04 | + | 0,04 | 45' |
| E | + | 5 | 0,04 | + | 0,04 | 75' |
| E | + | 9 | 0,04 | + | 0,04 | 60' |
| E | + | 10 | 0,04 | + | 0,04 | 75' |
| E | + | 11 | 0,04 | + | 0,04 | 75' |
| E | + | 13 | 0,04 | + | 0,04 | 75' |
| F | + | 1 | 0,04 | + | 0,04 | 210' |
| F | + | 2 | 0,04 | + | 0,04 | 180' |
| F | + | 4 | 0,04 | + | 0,04 | 105' |

Tabelle III (Fortsetzung)

| Arthropodizid Kennbuchstabe (vgl. Tab. I) | + Synergist (vgl. Tab. II) | Konzentrationen in % Wirkstoff + Synergist | LT 100 nach Minuten bzw. % nach 360' |
|---|---|---|---|
| F | + 5 | 0,04 + 0,04 | 210' |
| F | + 7 | 0,04 + 0,04 | 105' |
| F | + 9 | 0,04 + 0,04 | 105' |
| F | + 10 | 0,04 + 0,04 | 105' |
| F | + 11 | 0,04 + 0,04 | 180' |
| F | + 12 | 0,04 + 0,04 | 120' |
| G | + 1 | 0,04 + 0,04 | 30' |
| G | + 2 | 0,04 + 0,04 | 45' |
| G | + 3 | 0,04 + 0,04 | 45' |
| G | + 4 | 0,04 + 0,04 | 30' |
| G | + 5 | 0,04 + 0,04 | 45' |
| G | + 8 | 0,04 + 0,04 | 45' |
| G | + 9 | 0,04 + 0,04 | 45' |
| G | + 10 | 0,04 + 0,04 | 45' |
| G | + 12 | 0,04 + 0,04 | 30' |
| G | + 13 | 0,04 + 0,04 | 30' |
| I | + 10 | 0,04 + 0,04 | 30' |
| I | + 13 | 0,04 + 0,04 | 30' |
| K | + 1 | 0,04 + 0,04 | 90' |
| K | + 2 | 0,04 + 0,04 | 60' |
| K | + 5 | 0,04 + 0,04 | 90' |
| K | + 9 | 0,04 + 0,04 | 90' |

Tabelle III (Fortsetzung)

| Arthropodizid Kennbuchstabe (vgl. Tab. I) | + Synergist (vgl. Tab. II) | | Konzentrationen in % Wirkstoff | + Synergist | | LT 100 nach Minuten bzw. % nach 360' |
|---|---|---|---|---|---|---|
| K | + | 10 | 0,04 | + | 0,04 | 75' |
| K | + | 11 | 0,04 | + | 0,04 | 90' |
| L | + | 1 | 0,0016 | + | 0,0016 | 45' |
| L | + | 2 | 0,0016 | + | 0,0016 | 45' |
| L | + | 5 | 0,0016 | + | 0,0016 | 45' |
| L | + | 10 | 0,0016 | + | 0,0016 | 45' |
| M | + | 1 | 0,008 | + | 0,008 | 60' |
| M | + | 2 | 0,008 | + | 0,008 | 45' |
| M | + | 3 | 0,008 | + | 0,008 | 60' |
| M | + | 4 | 0,008 | + | 0,008 | 45' |
| M | + | 5 | 0,008 | + | 0,008 | 45' |
| M | + | 6 | 0,008 | + | 0,008 | 60' |
| M | + | 7 | 0,008 | + | 0,008 | 60' |
| M | + | 8 | 0,008 | + | 0,008 | 60' |
| M | + | 9 | 0,008 | + | 0,008 | 60' |
| M | + | 10 | 0,008 | + | 0,008 | 45' |
| M | + | 11 | 0,008 | + | 0,008 | 60' |
| M | + | 12 | 0,008 | + | 0,008 | 45' |
| M | + | 13 | 0,008 | + | 0,008 | 45' |
| N | + | 2 | 0,2 | + | 0,2 | 150' |
| N | + | 3 | 0,2 | + | 0,2 | 210' |
| N | + | 4 | 0,2 | + | 0,2 | 75' |
| N | + | 5 | 0,2 | + | 0,2 | 105' |

Tabelle III (Fortsetzung)

| Arthropodizid Kennbuchstabe (vgl. Tab. I) | + Synergist (vgl. Tab. II) | Konzentrationen in % Wirkstoff + Synergist | LT 100 nach Minuten bzw. % nach 360' |
|---|---|---|---|
| N | + 9 | 0,04 + 0,04 | 210' |
| N | + 10 | 0,04 + 0,04 | 210' |
| N | + 11 | 0,2 + 0,2 | 210' |
| N | + 12 | 0,2 + 0,2 | 210' |
| N | + 13 | 0,2 + 0,2 | 210' |
| O | + 2 | 0,04 + 0,04 | 90' |
| O | + 4 | 0,04 + 0,04 | 75' |
| O | + 7 | 0,04 + 0,04 | 75' |
| O | + 9 | 0,04 + 0,04 | 75' |
| O | + 10 | 0,04 + 0,04 | 75' |
| O | + 13 | 0,04 + 0,04 | 75' |
| P | + 1 | 0,008 + 0,008 | 180' |
| P | + 2 | 0,008 + 0,008 | 150' |
| P | + 3 | 0,008 + 0,008 | 105' |
| P | + 4 | 0,008 + 0,008 | 120' |
| P | + 6 | 0,008 + 0,008 | 150' |
| P | + 7 | 0,008 + 0,008 | 180' |
| P | + 8 | 0,008 + 0,008 | 180' |
| P | + 9 | 0,008 + 0,008 | 105' |
| P | + 10 | 0,008 + 0,008 | 90' |
| P | + 12 | 0,008 + 0,008 | 105' |
| P | + 13 | 0,008 + 0,008 | 180' |

Tabelle III (Fortsetzung)

| Arthropodizid Kennbuchstabe (vgl. Tab. I) | + Synergist (vgl. Tab. II) | | Konzentrationen in % Wirkstoff + Synergist | | | LT 100 nach Minuten bzw. % nach 360' |
|---|---|---|---|---|---|---|
| Q | + | 2 | 0,04 | + | 0,04 | 150' |
| Q | + | 3 | 0,04 | + | 0,04 | 180' |
| Q | + | 4 | 0,04 | + | 0,04 | 180' |
| Q | + | 5 | 0,04 | + | 0,04 | 240' |
| Q | + | 7 | 0,04 | + | 0,04 | 210' |
| Q | + | 8 | 0,04 | + | 0,04 | 210' |
| Q | + | 9 | 0,04 | + | 0,04 | 150' |
| Q | + | 10 | 0,04 | + | 0,04 | 120' |
| Q | + | 11 | 0,04 | + | 0,04 | 90' |
| Q | + | 12 | 0,04 | + | 0,04 | 150' |
| Q | + | 13 | 0,04 | + | 0,04 | 210' |
| | | | | | | |
| T | + | 3 | 0,04 | + | 0,04 | 360' |
| T | + | 7 | 0,04 | + | 0,04 | 360' |
| T | + | 9 | 0,008 | + | 0,008 | 150' |
| T | + | 10 | 0,04 | + | 0,04 | 75' |
| T | + | 11 | 0,2 | + | 0,2 | 240' |
| T | + | 12 | 0,2 | + | 0,2 | 75' |
| T | + | 13 | 0,2 | + | 0,2 | 150' |
| | | | | | | |
| U | + | 6 | 0,04 | + | 0,04 | 360' |
| U | + | 7 | 0,04 | + | 0,04 | 360' |
| U | + | 8 | 1,0 | + | 1,0 | 180' |
| U | + | 9 | 0,2 | + | 0,2 | 360' |
| U | + | 11 | 0,2 | + | 0,2 | 360' |
| U | + | 13 | 0,04 | + | 0,04 | 360' |

Tabelle III (Fortsetzung)

| Arthropodizid Kennbuchstabe (vgl. Tab. I) | + Synergist (vgl. Tab. II) | Konzentrationen in % Wirkstoff + Synergist | LT 100 nach Minuten bzw. % nach 360' |
|---|---|---|---|
| V | + 2 | 1,0 + 1,0 | 105' |
| V | + 4 | 0,2 + 0,2 | 360' |
| V | + 5 | 0,2 + 0,2 | 360' |
| V | + 6 | 0,04 + 0,04 | 240' |
| V | + 7 | 0,04 + 0,04 | 240' |
| V | + 8 | 0,2 + 0,2 | 240' |
| V | + 9 | 0,2 + 0,2 | 360' |
| V | + 12 | 0,2 + 0,2 | 360' |
| V | + 13 | 0,2 + 0,2 | 240' |
| W | + 6 | 0,04 + 0,04 | 210' |
| W | + 7 | 0,04 + 0,04 | 180' |

Das erfindungsgemäße Verfahren soll anhand der folgenden Herstellungsbeispiele erläutert werden:

<u>Beispiel 1</u> (Verfahrensvariante a)

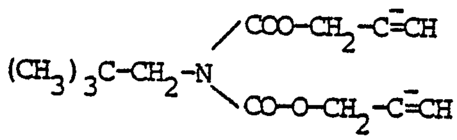

(Synergist Nr. 9)

Zu 21 g (0,1 Mol) N(2,2-Dimethylpropyl-N,N-bischlorcarbonylamin in 120 ml Toluol werden 11,2 g (0,2 Mol) Propargylalkohol gegeben und dann unter Kühlung auf etwa 10°C 20,2 g (0,2 Mol) Triethylamin zugetropft. Nach einer halben Stunde wird das Reaktionsgemisch mit Wasser versetzt, die organische Phase abgetrennt und die wäßrige Phase mit Methylenchlorid extrahiert. Die vereinigten organischen Phasen werden über Magnesiumsulfat getrocknet, im Wasserstrahlpumpenvakuum eingeengt und schließlich destilliert.

19,2 g (76 % d.Th.) N-(2,2-Dimethylpropyl)-N,N-bis-2-propinyl-oxycarbonyl-amin vom Sdp. 100-101°C/10 Pa (0,1 mbar) mit dem Brechungsindex $n_D^{20}$ : 1,4710 werden erhalten.

<u>Beispiel 2</u> (Verfahrensvariante b)

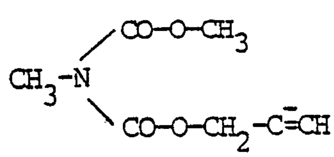

(Synergist Nr. 3)

15,6 g (0,1 Mol) N-Methyl-bischlorcarbonylamin werden in absolutem Toluol (100 ml) mit 3,2 g Methanol (0,1 Mol) versetzt und anschließend 14 ml Triethylamin zugetropft. (Durch Abfiltrieren des Niederschlages und fraktionierte Destillation kann gewünschtenfalls das N-Methyl-N-methoxycarbonyl-chlorcarbonylamin rein gewonnen werden: $n_D^{20}$ : 1,4602, Sdp. 40°C / 1 Pa (0,01 Mol)). Zum Reaktionsgemisch werden dann 5,6 g Propargylalkohol zugegeben und weitere 14 ml Triethylamin zugetropft. Man rührt 1 h bei 20°C nach, filtriert und engt ein. Man erhält 10,5 g (60 % der Theorie) N-Methoxycarbonyl-N-methyl-N-(2-propinyloxy-carbonyl)-amin mit einem $n_D^{20}$: 1,4848.

Beispiel 3 (Verfahrensvariante c)

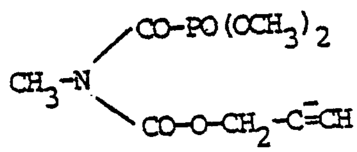

(Synergist Nr. 6)

Zu 31,2 g (0,2 Mol) N-Methyl-N,N-bischlorcarbonylamin in 150 ml absolutem Toluol werden 11,2 g Propargylalkohol (0,2 Mol) gegeben und mit 28 ml Triethylamin tropfenweise versetzt. Nach einer Stunde wird der Niederschlag abfiltriert und die Lösung eingeengt. Der Rückstand wird mit 24,8 g Trimethylphosphit tropfenweise versetzt. Dabei tritt Selbsterwärmung bis 40°C auf. Nach Ende der Gasentwicklung werden restliche flüchtige Bestandteile im Hochvakuum

entfernt. Der Rückstand (40 g ≙ 80 % d.Th.) ist das gewünschte Produkt N-(Dimethoxyphosponylcarbonyl)-N-methyl-N-(2-propinyloxycarbonyl)amin mit einem $n_D^{20}$ : 1,4785.

Beispiel 4 (Verfahrensvariante d)

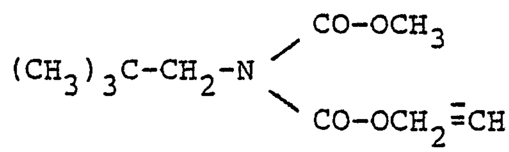

(Synergist Nr. 10)

Zu 10 g (0,047 Mol) N-(2,2-Dimethylpropyl)-N-bischlorcarbonylamin in 40 ml absolutem Toluol werden 2,63 g (0,047 Mol) Proparylalkohol und 4,7 g Triethylamin zugetropft. Nach einer halben Stunde werden 1,5 g Methanol (0,047 Mol) zugefügt und weitere 4,7 g Triethylamin zugetropft.

Nach 1 Stunde wird das Reaktionsgemisch auf Wasser gegossen, die organische Phase abgetrennt und die wäßrige mit Methylenchlorid extrahiert. Die vereinigten organischen Phasen werden über Magnesiumsulfat getrocknet und schließlich im Vakuum eingeengt.

8 g (75 % d.Th.) N-(2,2-Dimethylpropyl)-N-(methoxycarbonyl)-N-(2-propinyloxycarbonyl)amin mit einem $n_D^{20}$ : 1,4595 werden erhalten.

Beispiel 5 (Verfahrensvariante e)

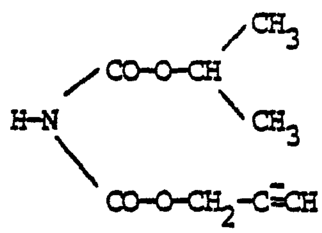

Zu 10,5 g (0,1 Mol) Chlorcarbonylisocyanat in 50 ml absolutem Toluol werden unterhalb 30°C erst 5,6 g (0,1 Mol) Propargylalkohol, dann 6 g (0,1 Mol) Isopropanol und schließlich 10,1 g (0,1 Mol) Triethylamin getropft. Es wird eine Stunde nachgerührt, der Niederschlag abfiltriert und das Lösungsmittel im Vakuum abdestilliert. Der Rückstand kristallisiert; er wird auf einer Tonplatte vom anhaftenden Öl befreit. 11 g (60 % d.Th.) Imidodicarbonsäure-O-(1-methyl-ethyl)-O'-2-propinyl-diester mit einem Fp. von 63°C wurden erhalten.

Beispiel 6 (Verfahrensvariante f)

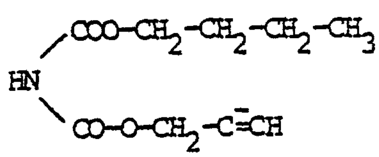

10,5 g (0,1 Mol) Chlorcarbonylisocyanat in 25 ml absolutem Toluol werden mit 7,6 g (0,1 Mol) Butanol tropfenweise versetzt. Nach 1/2 Stunde werden 5,6 g (0,1 Mol) Propargylalkohol zugegeben, die entstandene Lösung wird chromatographisch über Kieselgel aufgearbeitet. 7,5 g (37 % d.Th.)

Imidodicarbonsäure-O-butyl-O'-2-propinyl-diester mit einem $n_D^{20}$: 1,4670 werden erhalten.

In analoger Weise werden die folgenden Verbindungen erhalten:

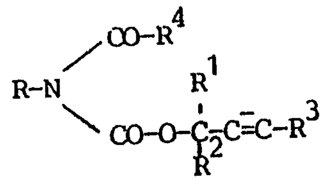

| Beispiel-Nr. (Synergist (Nr.) | R | $R^1$ | $R^2$ | $R^3$ | $R^4$ | $n_D^{20}$ (od. Fp.) | anwendbare Verfahrens-variante |
|---|---|---|---|---|---|---|---|
| 7/(1) | $CH_3$ | H | H | H | $-OCH_2C\equiv CH$ | 1,4830 | a) |
| 8/(2) | $CH_3$ | H | H | H | $-OCH(CH_3)_2$ | 1,4478 | b), d) |
| 9/(3) | $CH_3$ | H | H | H | $-OCH_3$ | Fp.38-39°C | b), d) |
| 10/(4) | $CH_3$ | H | H | H | $-OC_4H_9n$ | 1,4560 | b), d) |
| 11/(5) | $CH_3$ | H | H | H | $-OCH_2-C_6H_5$ | 1,5253 | b), d) |
| 12/(6) | $CH_3$ | H | H | H | $-PO(OCH_3)_2$ | 1,4758 | c) |
| 13/(7) | $CH_3$ | H | H | H | $-PO(OC_2H_5)_2$ | 1,4690 | c) |
| 14/(8) | $CH_3$ | H | H | H | $-PO(OCH_2CH_2-Cl)_2$ | 1,4970 | c) |
| 15/(9) | $(CH_3)_3CCH_2$ | H | H | H | $-OCH_2-C\equiv CH$ | 1,4699 | a) |
| 16/(10) | $(CH_3)_3CCH_2$ | H | H | H | $-OCH_3$ | 1,4595 | b), d) |
| 17/(11) | $(CH_3)_3CCH_2$ | H | H | H | $-O-C_6H_5$ | 1,5040 | b), d) |
| 18/(12) | 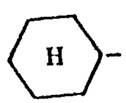 | H | H | H | $-O-CH_2-C\equiv CH$ | 1,4910 | a) |
| 19/(13) | 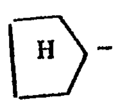 | H | H | H | $-O-CH_2-CH\equiv CH$ | 1,4965 | a) |

Fortsetzung der Tabelle

| Beispiel-Nr. (Synergist(Nr.) | R | $R^1$ | $R^2$ | $R^3$ | $R^4$ | $n_D^{20}$ (od. Fp.) | anwendbare Verfahrens-variante |
|---|---|---|---|---|---|---|---|
| 20 | $CH_3$ | H | H | H | $-O-C_6H_5$ | Fp.87-88°C | b), d) |
| 21 | H | H | H | H | $-O-CH_2-C\equiv CH$ | Fp.84°C | e), f) |
| 22 | H | H | H | H | $-OC_2H_5$ | Fp.47°C | e), f) |
| 23 | H | H | H | H | $-OCH(CH_3)_2$ | Fp.63°C | e), f) |
| 24 | H | H | H | H | $-OC_4H_9n$ | 1,4670 | e), f) |

Patentansprüche

1. Carbamidsäureester der allgemeinen Formel (I)

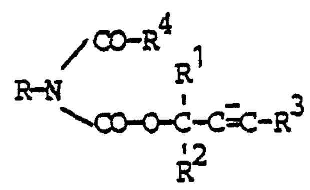

(I)

in welcher

R für Wasserstoff, für gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen und

$R^4$ für einen gegebenenfalls substituierten Rest aus der Reihe Alkoxy, Alkenyloxy, Alkinyloxy, Aryloxy, Arylalkyloxy oder für einen Rest der Formel

$$-\overset{O}{\overset{\|}{P}}(OR^5)_2,$$

in welcher

$R^5$ gegebenenfalls substituiertes Alkyl oder gegebenenfalls substituiertes Alkenyl bedeutet,

steht.

2. Carbamidsäureester gemäß Anspruch 1, in welchen

R für Wasserstoff oder für einen gegebenenfalls durch $C_1$-$C_4$-Alkoxy, Halogen, Cyan, Nitro und/oder Trifluormethyl substituierten Alkylrest mit 1-12 Kohlenstoffatomen oder für einen gegebenenfalls durch $C_1$-$C_4$-Alkoxy, Halogen, Cyano, Nitro und/oder Trifluormethyl substituierten Cycloalkylrest mit 3 bis 10 Kohlenstoffatomen steht und

$R^1$,$R^2$,$R^3$ gleich oder verschieden sind und einzeln für Wasserstoff oder für einen gegebenenfalls durch Halogen, Cyano, $C_1$-$C_4$-Alkoxy und/oder Trifluormethyl substituierten Alkylrest mit 1 bis 3 Kohlenstoffatomen steht und

$R^4$ für einen gegebenenfalls durch $C_1$-$C_4$-Alkoxy, Halogen, Cyan, Nitro und/oder Trifluormethyl substituierten Alkoxyrest mit 1 bis 6 Kohlenstoffatomen, oder für einen gegebenenfalls durch $C_1$-$C_4$-Alkoxy, Halogen, Cyan, Nitro und/oder Trifluormethyl substituierten Alkenyloxyrest mit 3 bis 8 Kohlenstoffatomen oder für einen gegebenenfalls durch $C_1$-$C_4$-Alkoxy, Halogen, Cyan oder Trifluormethyl substituierten Alkinyloxyrest mit 3 bis 8 Kohlenstoffatomen oder für einen gegebenenfalls durch $C_1$-$C_4$-Alkyl, $C_1$-$C_4$-Alkoxy, 1,2-Dioxomethylen, Halogen, Cyan, Nitro und/oder Trifluormethyl substituierten Phenoxy- oder

Naphthyloxyrest oder für einen gegebenenfalls durch $C_1$-$C_4$-Alkyl, $C_1$-$C_4$-Alkoxy, 1,2-Dioxomethylen, Halogen, Cyan, Nitro und/oder Trifluormethyl substituierten Arylalkyloxyrest mit insgesamt 7 bis 15 Kohlenstoffatomen steht oder für den $-PO(OR^5)_2$-Rest steht, worin

$R^5$ für einen gegebenenfalls durch $C_1$-$C_4$-Alkoxy, Halogen, Cyan, Nitro und/oder Trifluormethyl substituierten Alkylrest mit 1-8 Kohlenstoffatomen oder für einen gegebenenfalls durch $C_1$-$C_4$-Alkoxy, Halogen, Cyano, Nitro und/oder Trifluormethyl substituierten Alkenylrest mit 3 bis 8 Kohlenstoffatomen steht.

3. Carbamidsäureester gemäß Anspruch 1, in welchen

R für Wasserstoff oder einen gegebenenfalls durch Methoxy, Fluor, Chlor, Cyan und/oder Trifluormethyl substituierten Alkylrest mit 1-8 Kohlenstoffatomen oder für einen gegebenenfalls durch Methoxy, Fluor, Chlor, Cyan und/oder Trifluormethyl substituierten Cycloalkylrest mit 3-8 Kohlenstoffatomen steht und

$R^1$,$R^2$,$R^3$ gleich oder verschieden sind und einzeln für Wasserstoff oder für einen gegebenenfalls durch Methoxy, Fluor und/oder Chlor, substituierten Alkylrest mit 1-3 Kohlenstoffatomen stehen und

$R^4$ für einen gegebenenfalls durch Methoxy, Fluor, Chlor, Cyan, Nitro und/oder Trifluormethyl substituierten Alkoxyrest mit 1-6 Kohlenstoffatomen oder für einen gegebenenfalls durch Methoxy, Fluor, Chlor, Cyan, Nitro oder Trifluormethyl substituierten Alkenyloxyrest mit 3-5 Kohlenstoffatomen oder für einen gegebenenfalls durch Methoxy, Fluor, Chlor, Cyan, Nitro oder Trifluormethyl substituierten Alkinoxyrest mit 3-5 Kohlenstoffatomen oder für einen gegebenenfalls durch Methoxy, 2',3'-Dioxomethylen, 3',4'-Dioxomethylen, Fluor, Chlor, Brom, Cyano, Nitro und/oder Trifluormethyl substituierten Phenoxyrest oder für einen gegebenenfalls durch Methoxy, 2',3'-Dioxomethylen,3',4'-Dixomethylen, Fluor, Chlor, Brom, Cyano, Nitro und/oder Trifluormethyl substituierten Arylalkyloxyrest mit insgesamt 7-10 Kohlenstoffatomen steht oder für den $-PO(OR^5)_2$-Rest steht, worin

$R^5$ für einen gegebenenfalls durch Methoxy, Ethoxy, Fluor, Chlor, Cyan, Nitro und/oder Trifluormethyl substituierten Alkylrest mit 1-4 Kohlenstoffatomen oder für einen gegebenenfalls durch Methoxy, Ethoxy, Fluor, Chlor, Cyan, Nitro oder Trifluormethyl substituierten Alkenylrest mit 3-5 Kohlenstoffatomen steht.

4. Carbamidsäureester gemäß Anspruch 1, in welchen

R für Wasserstoff, Methyl, Neopentyl, Cyclopentyl oder Cyclohexyl steht,

$R^1$, $R^2$ und $R^3$ für Wasserstoff stehen und

$R^4$ für Alkoxy mit 1 bis 4 Kohlenstoffatomen, Propargyloxy, Phenoxy oder Benzyloxy oder für den $PO(OR^5)_2$-Rest, worin

$R^5$ Methyl, Ethyl oder 2-Chlorethyl bedeuten, steht.

5. Verfahren zur Herstellung von Carbamidsäureestern der allgemeinen Formel (I)

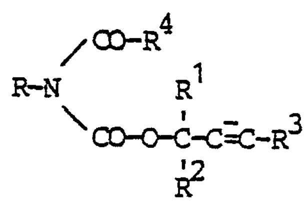

I

in welcher

R für Wasserstoff, für gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen und

$R^4$ für einen gegebenenfalls substituierten Rest

aus der Reihe Alkoxy, Alkenyloxy, Alkinyloxy, Aryloxy, Arylalkyloxy oder für einen Rest der Formel

$$-\overset{\overset{\displaystyle O}{\|}}{P}(OR^5)_2$$

in welcher

$R^5$ gegebenenfalls substituiertes Alkyl oder gegebenenfalls substutiertes Alkenyl bedeutet, steht,

dadurch gekennzeichnet, daß man

(1.) zur Herstellung der Verbindungen der allgemeinen Formel I, in welcher

R für gegebenenfalls substituiertes Alkyl oder für gegebenenfalls substituiertes Cycloalkyl steht und

$R^1$, $R^2$ und $R^3$ gleich oder verschieden sind und einzeln für Wasserstoff oder für gegebenenfalls substituiertes Alkyl stehen, und

$R^4$ für den Alkinoxyrest $-O-\underset{R^2}{\overset{R^1}{\overset{|}{\underset{|}{C}}}}-C\equiv C-R^3$,

in welchem $R^1$, $R^2$ und $R^3$ die oben angegebene Bedeutung haben, steht,

a) Bischlorcarbonylamine der allgemeinen Formel (II)

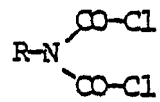

in welcher R die oben angegebene Bedeutung hat, mit Alkinolen der allgemeinen Formel (III)

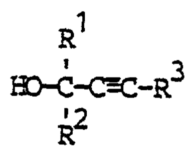

(III)

in welcher $R^1$, $R^2$ und $R^3$ die oben angegebene Bedeutung haben, in einem molaren Verhältnis von 1:2 (II:III) oder unter einem Überschuß der Alkinole der allgemeinen Formel (III) in Gegenwart eines (gegebenenfalls im Überschuß eingesetzten) Säurebindemittels und gegebenenfalls in Gegenwart eines inerten Verdünnungsmittels bei Temperaturen zwischen etwa -30° und 120°C umsetzt, oder

(2.) zur Herstellung von Verbindungen der Formel I, in welcher

R für gegebenenfalls substituiertes Alkyl oder für gegebenenfalls substituiertes Cycloalkyl steht,

$R^1$, $R^2$ und $R^3$ gleich oder verschieden sind und einzeln für Wasserstoff oder gegebenenfalls substituiertes Alkyl stehen und

$R^4$ für einen gegebenenfalls substituierten Rest aus der Reihe Alkoxy, Alkenyloxy, Alkinyloxy, Aryloxy oder Aralkyloxy steht,

b) Bischlorcarbonyl-alkylamine der allgemeinen Formel (II)

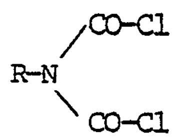

(II)

in welcher R die oben angegebene Bedeutung hat, zunächst mit einem Moläquivalent eines Alkinols der allgemeinen Formel (III)

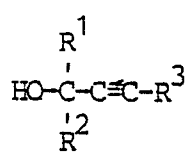

(III)

in welcher $R^1$, $R^2$ und $R^3$ die oben angegebene Bedeutung haben, in Gegenwart eines (gegebenenfalls im Überschuß eingesetzten) Säurebindemittels und gegebenenfalls in Gegenwart eines inerten Verdünnungsmittels bei Temperaturen zwischen etwa -30 und 120°C

umsetzt und die erhaltenen Verbindungen der allgemeinen Formel (IV)

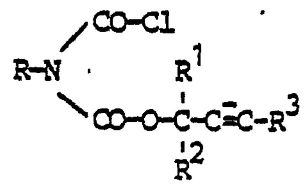

(IV)

in welcher R, $R^1$, $R^2$ und $R^3$ die oben angegebene Bedeutung haben, gegebenenfalls nach ihrer Isolierung mit einer Verbindung der allgemeinen Formel (V)

$$H-R^4 \qquad (V)$$

in welcher $R^4$ die oben angegebene Bedeutung hat, in Gegenwart eines (gegebenenfalls im Überschuß eingesetzten) Säurebindemittels und gegebenenfalls in Gegenwart eines inerten Verdünnungsmittels bei Temperaturen zwischen etwa -30 und 120°C umsetzt, oder

(3.) zur Herstellung der Verbindungen der allgemeinen Formel I, in welcher

R für gegebenenfalls substituiertes Alkyl oder für gegebenenfalls substituiertes Cycloalkyl steht und

$R^1$, $R^2$ und $R^3$ gleich oder verschieden sind

und einzeln für Wasserstoff oder für gegebenenfalls substituiertes Alkyl stehen, und

$R^4$ für $-\overset{O}{\overset{\|}{P}}(OR^5)_2$, in welcher $R^5$ gegebenenfalls substituiertes Alkyl oder gegebenenfalls substituiertes Alkenyl bedeutet, steht,

c) Verbindungen der allgemeinen Formel (IV)

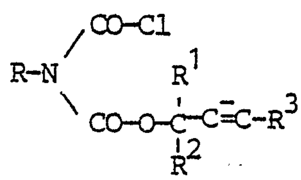

(IV)

in welcher R, $R^1$, $R^2$ und $R^3$ die oben angegebene Bedeutung haben mit Phosphiten der allgemeinen Formel (VI)

$$P(OR^5)_3 \qquad (VI)$$

in welcher $R^5$ die oben angegebenen Bedeutung hat,

gegebenenfalls in Gegenwart eines Verdünnungsmittels bei Temperaturen zwischen etwa -30 und 120°C umsetzt, oder

(4.) zur Herstellung der Verbindungen der allgemeinen Formel I, in welcher

R für Wasserstoff, gegebenenfalls substituiertes Alkyl oder für gegebenenfalls substituiertes Cycloalkyl steht und

$R^1$,$R^2$ und $R^3$ gleich oder verschieden sind und einzeln für Wasserstoff oder für gegebenenfalls substituiertes Alkyl stehen, und

$R^4$ für einen gegebenenfalls substituierten Rest aus der Reihe Alkoxy, Alkenyloxy, Alkinyloxy, Aryloxy oder Arylalkyloxy steht,

d) Bischlorcarbonylamine der allgemeinen Formel (II)

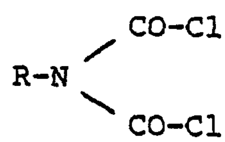

(II)

in welcher R die oben angegebene Bedeutung hat, mit einem Moläquivalent der Verbindungen der allgemeinen Formel (V)

$$H-R^4 \qquad (V)$$

in welcher $R^4$ die oben angegebene Bedeutung hat, in Gegenwart eines (gegebenenfalls in Überschuß eingesetzten) Säurebindemittels und gegebenenfalls in Gegenwart eines inerten Verdünnungsmittels bei Temperaturen zwischen etwa -30 und 120°C umsetzt und anschließend die erhaltene Verbindung der allgemeinen Formel (VII

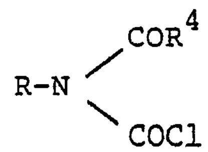

(VII)

in welcher R und $R^4$ die oben angegebene Bedeutung haben, gegebenenfalls nach ihrer Isolierung, mit einem Moläquivalent oder einem Überschuß eines Alkinols der allgemeinen Formel (III)

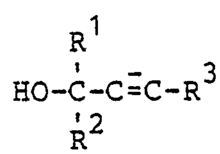

(III)

in welcher $R^1$, $R^2$ und $R^3$ die oben angegebene Bedeutung haben, in Gegenwart eines (gegebenenfalls im Überschuß eingesetzten) Säurebindemittels und gegebenenfalls in Gegenwart eines inerten Verdünnungsmittels bei Temperaturen zwischen -30 und 120°C umsetzt, oder

(5.) zur Herstellung der Verbindungen der allgemeinen Formel I, in welcher

R für Wasserstoff steht,

$R^1$, $R^2$ und $R^3$ gleich oder verschieden sind und einzeln für Wasserstoff oder für gegebenenfalls substituiertes Alkyl stehen und

$R^4$ für einen gegebenenfalls substituierten Rest aus der Reihe Alkoxy, Alkenyloxy, Alkinyloxy, Aryloxy oder Arylalkyloxy steht,

e) das Chlorcarbonylisocyanat der Formel (VIII)

OCN-CO-Cl (VIII)

mit einem Moläquivalent eines Alkinols der allgemeinen Formel (III)

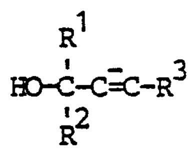

(III)

in welcher $R^1$, $R^2$ und $R^3$ die oben angegebene Bedeutung haben, gegebenenfalls in Gegenwart eines Säurebindemittels und gegebenenfalls in Gegenwart eines inerten Verdünnungsmittels bei Temperaturen zwischen etwa -30 und 120°C umsetzt, und die erhaltene Verbindung der Formel (IX)

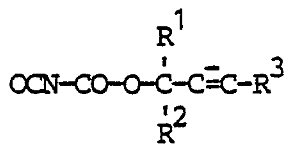

(IX)

in welcher $R^1$, $R^2$ und $R^3$ die oben angegebene Bedeutung haben, gegebenenfalls nach ihrer Isolierung, mit einer Verbindung der allgemeinen Formel (V)

$$H\text{-}R^4 \qquad (V)$$

in welcher $R^4$ die oben angegebene Bedeutung hat, gegebenenfalls in Gegenwart eines inerten Verdünnungsmittels und gegebenenfalls in Gegenwart eines Katalysators bei Temperaturen zwischen etwa -30 und 120°C umsetzt, oder

f) Chlorcarbonylisocyanat der Formel (VIII)

$$OCN\text{-}CO\text{-}Cl \qquad (VIII)$$

mit einem Moläquivalent einer Verbindung der allgemeinen Formel (V)

$$H\text{-}R^4 \qquad (V)$$

in welcher $R^4$ die oben angegebene Bedeutung hat,

gegebenenfalls in Gegenwart eines Säurebindemittels und gegebenenfalls in Gegenwart eines inerten Verdünnungsmittels bei Temperaturen zwischen etwa -30 und 120°C umsetzt, und die erhaltene Verbindung der allgemeinen Formel (X)

$$OCN-CO-R^4 \qquad (X)$$

in welcher $R^4$ die oben angegebene Bedeutung hat, gegebenenfalls nach ihrer Isolierung mit einem Alkinol der allgemeinen Formel (III)

$$HO-\underset{R^2}{\overset{R^1}{C}}-C\equiv C-R^3 \qquad (III)$$

in welcher $R^1$, $R^2$ und $R^3$ die oben angegebene Bedeutung haben, gegebenenfalls in Gegenwart eines Verdünnungsmittels und gegebenenfalls in Gegenwart eines Katalysators bei Temperaturen zwischen etwa -30 und 120°C umsetzt.

6. Verwendung der Carbamidsäureester der allgemeinen Formel I (gemäß Anspruch 1 oder 5) als Synergisten in Schädlingsbekämpfungsmitteln.

7. Schädlingsbekämpfungsmittel, welche wenigstens einen Carbamidsäureester der allgemeinen Formel (gemäß Anspruch 1 oder 5) als Synergisten enthalten.

8. Verwendung der Schädlingsbekämpfungsmittel gemäß Anspruch 7 zur Bekämpfung von Schädlingen, vorzugsweise Arthropoden.

9. Verfahren zur Herstellung von Schädlingsbekämpfungsmitteln, dadurch gekennzeichnet, daß man wenigstens

einen Carbamidsäureester der allgemeinen Formel I (gemäß Anspruch 1 oder 5) mit wenigstens einem Arthropodizid und Verdünnungsmitteln und gegebenenfalls Formulierungshilfsmitteln, wie oberflächenaktiven Stoffen vermischt.

10. Verfahren zur Bekämpfung von Schädlingen, dadurch gekennzeichnet, daß man ein Schädlingsbekämpfungsmittel gemäß Anspruch 7 auf die Schädlinge oder ihren Lebensraum einwirken läßt.

0100966

Europäisches Patentamt

# EUROPÄISCHER RECHERCHENBERICHT

Nummer der Anmeldung

EP 83 10 7422

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| D,A | DE-B-2 041 986 (CIBA)<br>* Ansprüche *<br>----- | 1 | C 07 C 125/06<br>C 07 F 9/09<br>A 01 N 47/10<br>A 01 N 57/20 |
| | | | RECHERCHIERTE SACHGEBIETE (Int. Cl. 3) |
| | | | C 07 C 125/00<br>C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 22-11-1983 | GAUTIER R.H.A. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82